# EUROPEAN PATENT APPLICATION

(11) **EP 4 738 805 A1**
(43) Date of publication of application: **06.05.2026**
(21) Application number: 23952523.1
(22) Date of filing: 19.09.2023
(51) Int. Cl.: H04M 1/72454

(54) **DISPLAY METHOD, TERMINAL DEVICE, AND COMPUTER-READABLE MEDIUM**

(71) Applicant: Honor Device Co., Ltd., Shenzhen, Guangdong 518040 (CN)
(72) Inventor: HU, Shaozhe, Shenzhen, Guangdong 518040 (CN)
(74) Representative: Isarpatent
(86) International application number: PCT/CN2023/119715
(87) International publication number: WO 2025/059858

(57) **Abstract**

The present invention relates to the field of terminal technologies, and more specifically, to a display method, a terminal device, and a computer-readable medium. In the method, an attribute configuration of disabling an operation of pulling down a status bar but displaying a banner notification is added, and an attribute corresponding to the operation of pulling down the status bar on a terminal device such as a mobile phone is decoupled from an attribute corresponding to display of the banner notification, to balance a requirement for immersive experience of a user and requirements such as checking an important notification message in time. Even if the terminal device enters a notification disabled state, the operation of pulling down the status bar is disabled, and the banner notification can still be displayed. In this way, in different immersive scenarios, the banner notification may be displayed for a prompt according to a requirement of the user, to avoid missing an important notification message, thereby improving user experience.

## Description

### TECHNICAL FIELD

The present invention relates to the field of terminal technologies, and more specifically, to a display method, a terminal device, and a computer-readable medium.

### BACKGROUND

A notification message may be displayed in a status bar of a terminal device, to forward a notification obtained during running of a system or an installed application (application, APP). In a use state of the terminal device after a screen is unlocked, the notification message in a banner form may be displayed in the status bar, and the message may be automatically retracted to a notification queue in the top status bar after a short stay. A user may view the retracted notification message through an operation of pulling down the top status bar. In addition, in a state in which the terminal device locks the screen, the terminal device can also display the notification message. In this way, the user can be prompted in time to process the message, to avoid ignoring some important notification messages and causing inconvenience to the user.

In some display scenarios or some display modes of the terminal device, for example, when the terminal device is a foldable-screen device, the user is using a subordinate screen to perform an immersive operation such as taking a selfie. In this case, the terminal device enters a notification disabled state that is also referred to as an immersive state. In this state, the terminal device disables the operation of pulling down the status bar by the user. However, a notification message in a form of a banner notification or the like cannot be displayed in the status bar of the terminal device at the same time. Therefore, the user may miss an important notification message, causing poor user experience.

### SUMMARY

Embodiments of this application provide a display method, a terminal device, and a computer-readable medium, so that the terminal device can set disabling of pull-down of a status bar and display a banner notification even if the terminal device enters a notification disabled state. In this way, in different immersive scenarios, the terminal device may display the banner notification for a prompt according to a requirement of a user, to avoid missing an important notification message, thereby improving user experience.

According to a first aspect, this application provides a display method, applied to a terminal device. The terminal device includes a display. The display includes at least a first screen, a second screen, and a first camera. The first screen and the first camera of the terminal device are respectively located on two sides of the terminal device. When the terminal device is in an unfolded state, the first screen and the second screen are on a same side of the terminal device. When the terminal device is in a folded state, the first camera and the second screen are located on a same side of the terminal device. The method includes:
displaying a first interface of a first application on the first screen based on the terminal device being in the folded state;
receiving, at a first time point, a first notification of a second application, and displaying a banner notification of the first notification on the first screen;
receiving, at a second time point, a first operation of pulling down a status bar, and displaying a notification list, where the notification list includes an option of at least one notification;
displaying a second interface of the second application in response to a user tapping an option of the first notification;
after the user flips a mobile phone, displaying a third interface of the first application on the second screen;
receiving, at a third time point, a second notification of the second application, and displaying a banner notification of the second notification on the second screen; and
receiving, at a fourth time point, a second operation of pulling down the status bar, and skipping displaying the notification list.

For example, the terminal device may be a foldable-screen device, such as a foldable-screen mobile phone. The first screen may be a main screen of the mobile phone, and the second screen may be a subordinate screen of the mobile phone. The first camera may be a rear-facing camera of the mobile phone. The first application may be a camera application, and the second application may be another application such as Phone or WeChat^{™}. Correspondingly, the first interface of the first application displayed on the first screen may be a shooting interface of the camera application. At the first time point, the mobile phone may prompt, by using a banner notification, the user with a notification message sent by an application such as Phone or WeChat^{™}, that is, the first notification. At the second time point, the mobile phone may respond to the operation of pulling down the status bar by the user, for example, the first operation, and display the notification list. In some other embodiments, the mobile phone may alternatively respond to the operation of pulling down the status bar by the user, and display a control center. This is not limited herein. It may be understood that the first time point and the second time point may be a same time point, or the first time point may be earlier than the second time point.

If the mobile phone detects that the user taps the option of the first notification in the displayed notification list, the mobile phone may display a related interface of a corresponding application such as Phone or WeChat^{™}.If the mobile phone detects that the user flips the mobile phone, the mobile phone may display the shooting interface on the subordinate screen (that is, the second screen). In this case, a size of the subordinate screen may be smaller than a size of the main screen. For example, a width of the subordinate screen is narrower than a width of the main screen. To avoid an error in displaying a related interface of the notification list, when the subordinate screen displays the shooting interface, the operation of pulling down the status bar by the user may be disabled, but the banner notification can be displayed while the shooting interface is displayed. In other words, the banner notification is displayed on the second screen at the third time point, and the operation of pulling down the status bar is received and the notification list is displayed at the fourth time point. In this way, the user does not miss an important notification message when performing an operation on the shooting interface displayed on the subordinate screen of the mobile phone. The third time point and the fourth time point may be the same, or the third time point may be earlier than the fourth time point. This is not limited herein.

In a possible implementation of the first aspect, the method further includes: The first screen and the second screen are two parts of display areas of the display; and the third interface is an interface obtained after the first interface is adapted to a size of the second screen through adjustment.

It may be understood that the first screen (for example, the main screen) and the second screen (for example, the subordinate screen) may be the two parts of the display areas of the same flexible display. The third interface of the first application displayed on the second screen may be, for example, the shooting interface of the camera application displayed on the subordinate screen. The shooting interface may be drawn by a system rendering process called by the camera application adapted to the size of the subordinate screen. Details are not described herein.

In a possible implementation of the first aspect, the method includes: after the fourth time point, in response to the terminal device being in the folded state, displaying the first interface of the first application on the second screen, and skipping responding to the second operation of pulling down the status bar.

It may be understood that, after the fourth time point, that is, when the user flips the mobile phone so that the mobile phone displays the shooting interface on the subordinate screen, the mobile phone may keep pull-down of the status bar disabled but allow display of the banner notification.

In a possible implementation of the first aspect, an attribute parameter of the status bar includes a first attribute parameter and a second attribute parameter. The first attribute parameter indicates whether an interface displayed on the first screen or the second screen responds to the operation of pulling down the status bar, and indicates whether a banner notification is displayed on the interface displayed on the first screen or the second screen. The second attribute parameter indicates whether the interface displayed on the first screen or the second screen responds to the operation of pulling down the status bar, and indicates whether the banner notification is displayed on the interface displayed on the first screen or the second screen.

In a possible implementation of the first aspect, types of the first attribute parameter and the second attribute parameter each include a flag attribute, the first attribute parameter includes an attribute parameter "DISABLE_EXPAND_EXCEPT_HEADSUP", and the second attribute parameter includes an attribute parameter "DISABLE_EXPAND".

In some other embodiments, the first attribute parameter and the second attribute parameter may alternatively be attribute parameters in other forms. This is not limited herein.

In a possible implementation of the first aspect, the method includes:
based on a value of the second attribute parameter being set to 0 and a value of the first attribute parameter being set to 0, receiving, at the first time point, the first notification of the second application, and displaying the banner notification of the first notification on the first screen; and
based on the value of the second attribute parameter being set to 0 and the value of the first attribute parameter being set to 0, receiving, at the second time point, the first operation of pulling down the status bar, and displaying a notification list.

For example, corresponding to a case in which the mobile phone allows pull-down of the status bar and display of the banner notification, the attribute parameter of the status bar may be set as follows: The value of the second attribute parameter is 0, and the value of the first attribute parameter is also 0. In other words, setting may be completed by using the following function:
"panelsEnabled()
(Disabled1&DISABLE_EXPAND)=0&&
(Disabled1&DISABLE_EXPAND_EXCEPT_HEADSUP)=0".

In a possible implementation of the first aspect, the method includes:
based on a value of the second attribute parameter being set to 0 and a value of the first attribute parameter being set to 1, receiving, at the third time point, the second notification of the second application, and displaying the banner notification of the second notification on the second screen; and
based on the value of the second attribute parameter being set to 0 and the value of the first attribute parameter being set to 1, receiving, at the fourth time point, the second operation of pulling down the status bar, and skipping displaying the notification list.

For example, corresponding to a case in which the mobile phone disables pull-down of the status bar but allows display of the banner notification, the attribute parameter of the status bar may be set as follows: The value of the second attribute parameter is 0, and the value of the first attribute parameter is 1. In other words, setting may be completed by using the following function:
"panelsEnabled()
(Disabled1&DISABLE_EXPAND)=0&&
(Disabled1&DISABLE_EXPAND_EXCEPT_HEADSUP)!=0".

In a possible implementation of the first aspect, the method further includes:
based on a value of the second attribute parameter being set to 1, receiving, at a fifth time point, a third notification of the second application, and skipping displaying a banner notification of the third notification on the first screen or the second screen; and
based on the value of the second attribute parameter being set to 1, receiving, at a sixth time point, a third operation of pulling down the status bar, and skipping displaying the notification list.

For example, corresponding to a case in which the mobile phone disables pull-down of the status bar and display of the banner notification, the attribute parameter of the status bar may be set as follows: The value of the second attribute parameter is 1. In other words, setting may be completed by using the following function:
"panelsEnabled()
(Disabled1&DISABLE_EXPAND)=1".

In a possible implementation of the first aspect, setting the value of the second attribute parameter to 1 includes:
receiving a value set by the first application for the second attribute parameter, and setting the value of the second attribute parameter to 1; or
receiving an operation of setting the second attribute parameter in a setting interface by the user, and setting the value of the second attribute parameter to 1.

For example, the camera application may set, in a system of the mobile phone according to a service requirement of the camera application, disabling of pull-down of the status bar and disabling of display of the banner notification, and the user may also set, by setting a setting interface provided by the application, disabling of pull-down of the status bar and disabling of display of the banner notification for the shooting interface of the camera application or an interface of another application.

In a possible implementation of the first aspect, the operation of pulling down the status bar includes:
a fourth operation of sliding downward by the user in a touch area that is displayed on a screen top of the first screen or the second screen and that is close to a first side edge, where the fourth operation enables the terminal device to display the notification list; or a fifth operation of sliding downward by the user in a touch area that is displayed on a screen top of the first screen or the second screen and that is close to a second side edge, where the fifth operation enables the terminal device to display a control center. The first side edge and the second side edge are different side edges of the screen top of the first screen or the second screen.

According to a second aspect, this application provides a terminal device, including one or more processors and one or more memories. The one or more memories store one or more programs. When the one or more programs are executed by the one or more processors, the terminal device is enabled to perform the display method according to the first aspect or any one of the possible implementations of the first aspect.

According to a third aspect, this application provides a computer-readable medium. Instructions are stored in the readable medium. When the instructions are executed on a computer, the computer executes the display method according to the first aspect or any one of the possible implementations of the first aspect.

According to a fourth aspect, an embodiment of this application provides a computer program product, including a computer program/instructions. When the computer program/instructions are executed by a processor, the display method according to the first aspect or any one of the possible implementations of the first aspect is implemented.

For beneficial effects of the second aspect to the fourth aspect, refer to the relevant descriptions in the first aspect and various possible implementations of the first aspect. Details are not described herein again.

### BRIEF DESCRIPTION OF DRAWINGS

FIG. 1A(1) and FIG. 1A(2) are a diagram of an application scenario in which a foldable-screen device displays application interfaces based on different displays;
FIG. 1B is a diagram of a folded-unfolded form of a foldable-screen device;
FIG. 1C is another diagram of a folded-unfolded form of a foldable-screen device;
FIG. 2A is a diagram of an interface that allows an operation of pulling down a status bar according to an embodiment of this application;
FIG. 2B is a diagram of an interface that disables an operation of pulling down a status bar according to an embodiment of this application;
FIG. 3A and FIG. 3B are a schematic flowchart of an implementation of a display method according to an embodiment of this application;
FIG. 4 is a diagram of an interface of displaying a banner notification on a mobile phone according to an embodiment of this application;
FIG. 5 is a diagram of a software structure of an operating system of a terminal device according to an embodiment of this application;
FIG. 6A, FIG. 6B, FIG. 6C, and FIG. 6D are a diagram of an implementation of an interaction procedure of a display method according to an embodiment of this application;
FIG. 7A is a diagram of a shooting interface displayed on a main screen and a prompt interface displayed on a subordinate screen of a mobile phone in a folded state according to an embodiment of this application;
FIG. 7B is a diagram of a shooting interface displayed on a main screen and a shooting interface displayed on a subordinate screen of a mobile phone in a folded state according to an embodiment of this application;
FIG. 8 is a diagram of a principle of implementing a display method in an operating system according to an embodiment of this application;
FIG. 9A and FIG. 9B are a diagram of an implementation procedure of responding to a related operation performed by a user on a banner notification according to an embodiment of this application;
FIG. 10A is a diagram of an interface on which a tap operation is performed on a displayed banner notification according to an embodiment of this application;
FIG. 10B is a diagram of an interface on which a rightward or leftward slide operation is performed on a displayed banner notification according to an embodiment of this application;
FIG. 10C is a diagram of an interface on which an upward or a downward slide operation is performed on a displayed banner notification according to an embodiment of this application;
FIG. 10D is a diagram of a corresponding displayed interface of a leftward slide operation performed on a displayed banner notification according to an embodiment of this application; and
FIG. 11 is a diagram of a hardware structure of a terminal device according to an embodiment of this application.

### DESCRIPTION OF EMBODIMENTS

To make objectives, technical solutions, and advantages of the embodiments of this application clearer, the following describes the technical solutions in the embodiments of this application in detail with reference to the accompanying drawings and specific implementations of the specification.

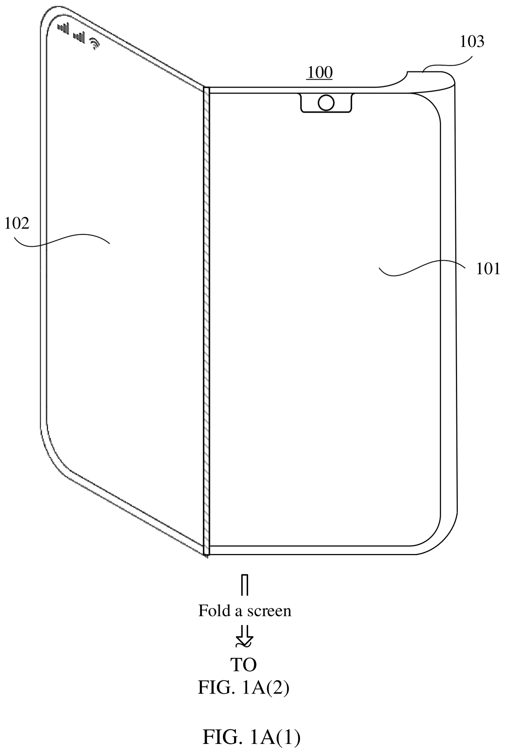

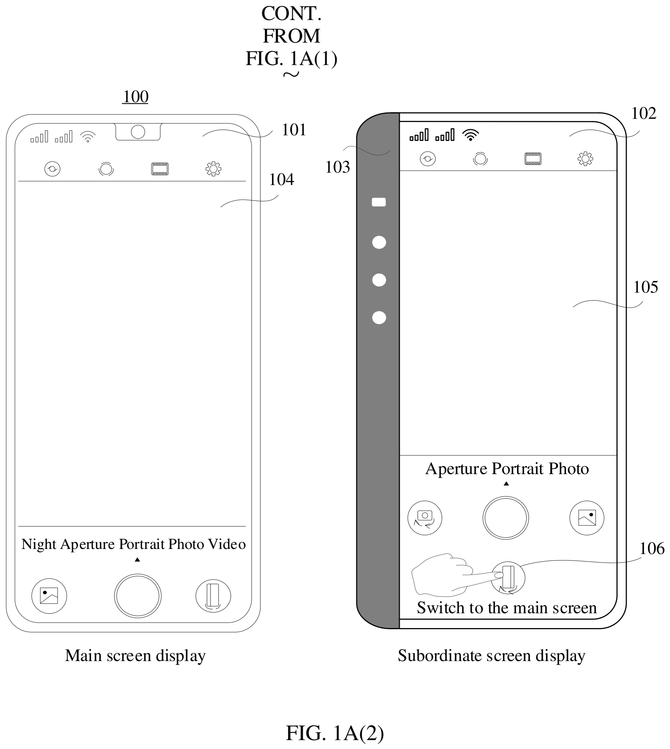

FIG. 1A(1) and FIG. 1A(2) are a diagram of an application scenario in which a foldable-screen device displays application interfaces based on different displays.

As shown in FIG. 1A(1) and FIG. 1A(2), a mobile phone 100 is a foldable-screen device, and includes a display 101, a display 102, and a camera module 103. The display 101 and the display 102 may be two display areas of a same flexible display. The display 101 may also be referred to as a "main screen", and the display 102 may also be referred to as a "subordinate screen". For example, a size such as a width of the subordinate screen may be smaller than a width in a size of the main screen. In other words, the subordinate screen may be narrower than the main screen. In addition, display directions of the main screen and the subordinate screen of the mobile phone 100 in an unfolded state are the same. In other words, directions that displayed content on the display 101 and that on the display 102 face are the same. The display directions of the main screen and the subordinate screen of the mobile phone 100 in a folded state are opposite. In other words, the directions that the displayed content on the display 101 and that on the display 102 face are opposite. In the folded state, the display 102 may be on a same side as the camera module 103.

When the mobile phone 100 enters the folded state from the unfolded state, if the mobile phone 100 displays a shooting interface on the display 101, a shooting interface 104 shown in FIG. 1A(2) may be displayed. If the mobile phone 100 displays a shooting interface on the display 102, an exemplary form of a shooting interface 105 shown in FIG. 1A(2) may be displayed. As shown in FIG. 1A(1) and FIG. 1A(2), an operation manner in which the mobile phone 100 enters the folded state may be an outward-folding manner of folding the display 102 outward.

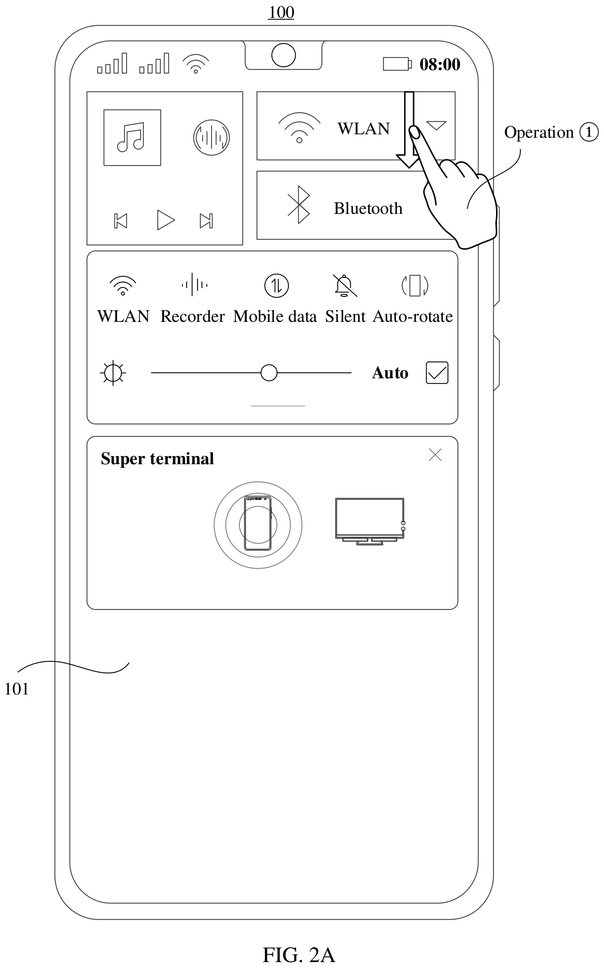

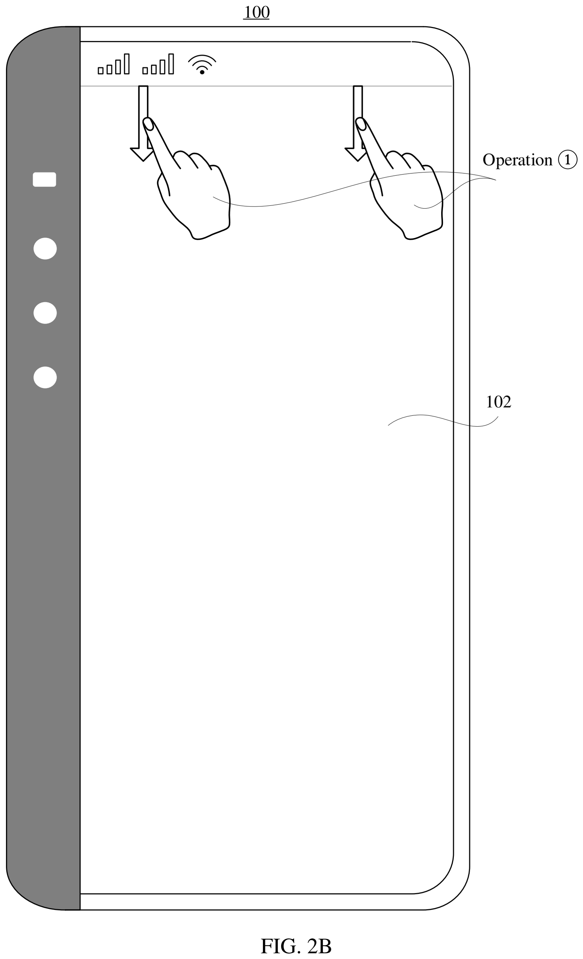

In this case, if a user performs shooting by using the camera module 103, that is, the mobile phone 100 enters a rear selfie mode, the mobile phone 100 may automatically enter a notification disabled state, that is, an immersed state, while displaying the shooting interface 105. In other words, in this case, the mobile phone 100 disables an operation of pulling down the status bar. However, because a pull-down panel corresponding to the status bar and a banner notification belong to a same window or interface (view), the mobile phone 100 in this state also disables display of the banner notification. For the operation of pulling down the status bar, refer to an operation ① shown in FIG. 2A or FIG. 2B. The user drags the status bar downward from a left side of a screen top or a right side of a screen top. When the user taps a switch control 106 on the shooting interface 105 to switch to the main screen, the mobile phone 100 may switch to the main screen and exit the notification disabled state. In this case, the status bar of the mobile phone 100 may allow the user to perform the operation of pulling down the status bar and display the banner notification. After exiting the notification disabled state, the mobile phone 100 may respond to the operation ① performed by the user on the right side of the screen top, and display a control center interface shown in FIG. 2B, even if the user sets non-display of a notification message.

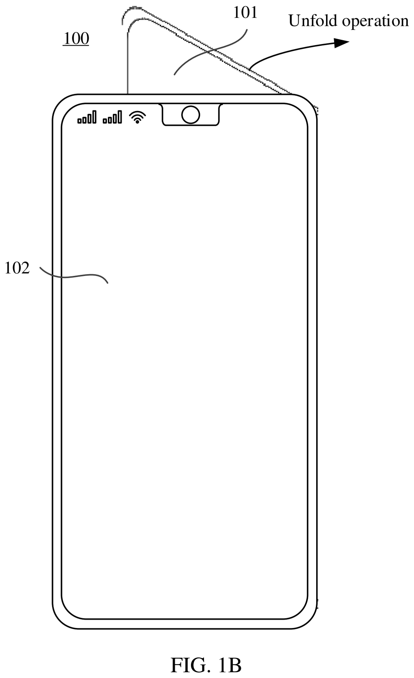

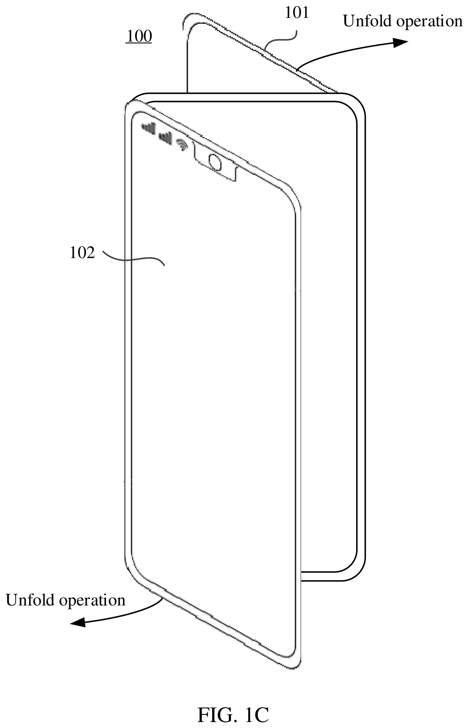

It may be understood that the folded-unfolded form of the mobile phone 100 shown in FIG. 1A(1) and FIG. 1A(2) is merely an example provided in this application. In some other embodiments, the folded-unfolded form of the foldable-screen mobile phone 100 may also be a folded-unfolded form shown in FIG. 1B or FIG. 1C. As shown in FIG. 1B, an operation manner in which the mobile phone 100 enters the folded state may be an inward folding manner in which the display screen is folded inward. The camera module may be on a side on which the display 102 is located. As shown in FIG. 1C, an operation manner in which the mobile phone 100 enters the folded state may be a folding manner in which a display of a multi-fold foldable device is folded. The camera module may be on a side on which the display 102 is located. This is not limited herein.

Specifically, with reference to FIG. 2A, when displaying the shooting interface on the main screen 101, the mobile phone 100 may allow the operation of pulling down the status bar. For example, when the user performs the operation ① on the right side of the screen top, the mobile phone 100 may respond to the operation ① to display the control center interface shown in FIG. 2A.

With reference to FIG. 2B, when the mobile phone 100 enters the rear selfie mode and displays the shooting interface on the subordinate screen 102, the mobile phone 100 may enter the notification disabled state. In the notification disabled state, if the user performs the operation ① on the left side of the screen top or the right side of the screen top, the mobile phone 100 may display a no-responding interface in FIG. 2B, for example, does not display the control center interface or does not display a notification list retracted in the status bar.

Therefore, in the foregoing scenario, if the mobile phone 100 enters the folded state and displays the shooting interface on the subordinate screen, the mobile phone 100 disables pull-down of the status bar and does not display the banner notification. In other words, the mobile phone 100 is set to enter the notification disabled state. In this case, some important notification messages are prone to neglect by the user in this interface. In a process in which the mobile phone 100 enters the folded state and displays the shooting interface on the subordinate screen, the mobile phone 100 allows operations such as pulling down the status bar or tapping the notification list of the status bar to open a related application. Because the size of the subordinate screen is inconsistent with the size of the main screen, for example, the width of the main screen is narrower, an error may occur in displaying the notification list or a related application interface by the mobile phone 100, causing poor user experience.

To resolve the foregoing problem, this application provides a display method. Specifically, in the method, an attribute configuration of disabling the operation of pulling down the status bar but displaying the banner notification is added, and an attribute corresponding to the operation of pulling down the status bar on a terminal device such as a mobile phone is decoupled from an attribute corresponding to display of the banner notification, to balance a requirement for immersive experience of the user and requirements such as checking an important notification message in time. The terminal device can still display the banner notification even if the terminal device enters the notification disabled state and disables the operation of pulling down the status bar. In this way, in different immersive scenarios, the banner notification may be displayed for a prompt according to a requirement of the user, to avoid missing an important notification message, thereby improving user experience.

In addition, the user may also set, according to a personal preference, the notification disabled state and continue to use a control mode in which the operation of pulling down the status bar is disabled and display of the banner notification is disabled. For example, the user may set a related control displayed on a setting interface corresponding to "Notifications and Status bar" of an application to set enabling of the notification disabled state and the like.

It may be understood that the terminal device such as the mobile phone may configure the operation of pulling down the status bar and the attribute of the banner notification in a manner of setting flag attribute parameters of a corresponding interface (view) and the like. For example, whether to allow the operation of pulling down the status bar or disable the operation of pulling down the status bar may be controlled by setting a value of an attribute parameter "DISABLE_EXPAND" corresponding to whether to allow the operation of pulling down the status bar in a flag attribute. In an existing solution, if the value of the attribute parameter is "1", it indicates that the operation of pulling down the status bar is disabled. In addition, a system of the terminal device such as the mobile phone also disables display of the banner notification. If the value of the attribute parameter is "0", it indicates that the operation of pulling down the status bar is allowed. In this case, the system also allows display of the banner notification.

In this embodiment of this application, another attribute parameter "DISABLE_EXPAND_EXCEPT_HEADSUP" is added to the flag attribute, and is combined with the attribute parameter "DISABLE_EXPAND", to implement setting of an attribute configuration of disabling the operation of pulling down the status bar but allowing display of the banner notification. For example, when the value of the attribute parameter "DISABLE_EXPAND" is "1", the terminal device such as the mobile phone may determine, based on whether the attribute parameter "DISABLE_EXPAND_EXCEPT_HEADSUP" is "1", whether to disable the operation of pulling down the status bar but allow display of the banner notification. If a value of "DISABLE_EXPAND_EXCEPT_HEADSUP" is "1", the banner notification can be displayed. If a value of "DISABLE_EXPAND_EXCEPT_HEADSUP" is "0", display of the banner notification is disabled. A specific setting process is described in detail below with reference to a related flowchart. Details are not described herein.

In some other embodiments, a configuration state of disabling the operation of pulling down the status bar but allowing display of the banner notification and the like may be set by configuring another attribute parameter different from the flag attribute and/or configuring a corresponding attribute parameter as a value in another form. For example, the value of "DISABLE_EXPAND_EXCEPT_HEADSUP" may be set to "true" or "false", and/or the value of "DISABLE_EXPAND" be set to "true" or "false", to set various configuration states. This is not limited herein.

It may be understood that a terminal to which the display method provided in embodiments of this application is applicable may include but is not limited to a mobile phone, a tablet computer, a desktop computer, a laptop computer, a handheld computer, a netbook, an augmented reality (augmented reality, AR)/virtual reality (virtual reality, VR) device, a smart television, a wearable device such as a smart watch, a server, a vehicle-mounted device, a portable game console, a portable music player, a reader device, a terminal device with one or more processors embedded or coupled, or another terminal device that can access a network.

By using the foldable-screen device: the mobile phone 100 in the application scenario shown in FIG. 1A(1) and FIG. 1A(2) as an example, the following continues to describe a specific process in which the mobile phone 100 implements display of the banner notification in a case of disabling pull-down of the status bar in the display method provided in this application in a process of enabling the rear selfie mode of the camera application. It may be understood that, in some embodiments, the rear selfie mode may also be referred to as a "super selfie mode" or another mode. This is not limited herein.

It may be understood that, for the foldable-screen device: the mobile phone 100 in the application scenario shown in FIG. 1A(1) and FIG. 1A(2) , the rear selfie mode is a shooting mode in which shooting is performed by using the rear-facing camera of the mobile phone 100 (with reference to a camera provided in the camera module 103 shown in FIG. 1A(1) and FIG. 1A(2) ) and the user is performing a shooting operation on the shooting interface displayed on the subordinate screen. The camera application running on the mobile phone 100 may further support a rear shooting mode. The shooting mode is a shooting mode in which the user may face the main screen or the unfolded full screen of the mobile phone 100 and perform a shooting operation. This is not limited herein.

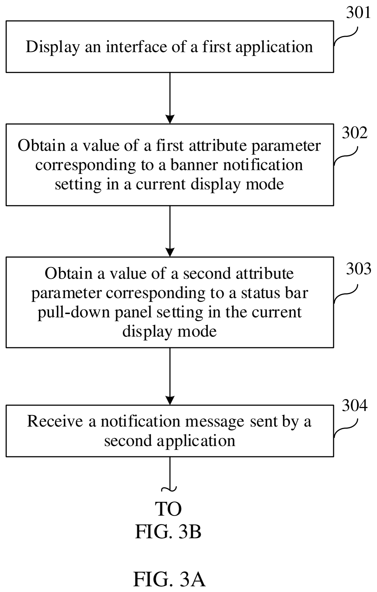

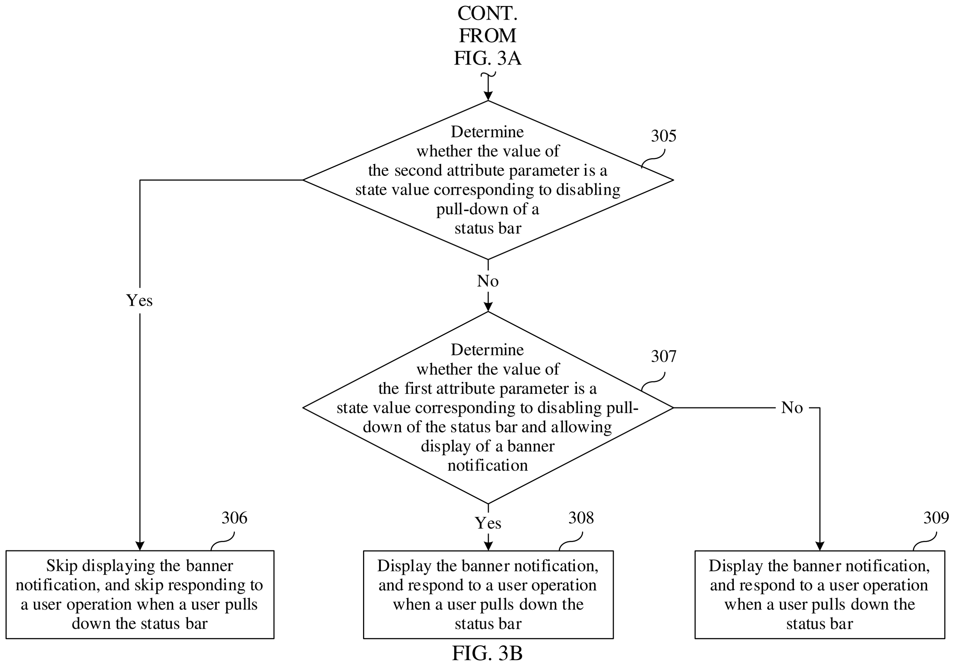

FIG. 3A and FIG. 3B are a schematic flowchart of an implementation of a display method according to an embodiment of this application. It may be understood that steps in the procedure shown in FIG. 3A and FIG. 3B may be all executed by the mobile phone 100, or another terminal electronic device that is applicable to the display method provided in this application. This is not limited herein.

Specifically, as shown in FIG. 3A and FIG. 3B, the implementation procedure includes:
301: Display an interface of a first application.

For example, in this embodiment of this application, the interface of the first application may be a camera application shooting interface that triggers a notification disabled state of the mobile phone 100, for example, a rear selfie mode shooting interface displayed on the subordinate screen of the foldable-screen mobile phone 100. For a specific process in which the mobile phone 100 responds to a user operation and uses the rear selfie mode shooting interface displayed on the subordinate screen, refer to the following descriptions with reference to related accompanying drawings. Details are not described herein.

In some other embodiments, the interface of the first application may also be another interface that enables the mobile phone to enter the notification disabled state. A reason why the interface of the first application correspondingly triggers the mobile phone to enter the notification disabled state may be set based on a related setting of the user for "Notifications and Status bar", or may be set by default based on a requirement of improving user experience by the system of the mobile phone 100 or a related application. This is not limited herein.

302: Obtain a value of a first attribute parameter corresponding to a banner notification setting in a current display mode.

For example, the first attribute parameter corresponding to the banner notification setting may be, for example, "DISABLE_EXPAND_EXCEPT_HEADSUP" or another parameter that can be used to set a banner notification attribute. This is not limited herein.

For example, in the operating system of the mobile phone 100, the value of the first attribute parameter may be set by using a banner notification coordinator (heads up coordinator) or a foldable-screen management module. The setting process may be implemented through a function call. A correspondingly called function may be, for example, StatusBarManager.disable() or another function that has a similar function. This is not limited herein.

303: Obtain a value of a second attribute parameter corresponding to a status bar pull-down panel setting in the current display mode.

For example, the second attribute parameter corresponding to the status bar pull-down panel setting may be, for example, "DISABLE_EXPAND" or another attribute parameter that can be used to set disabling of a user operation of pulling down the status bar. This is not limited herein.

For example, in the operating system of the mobile phone 100, the value of the second attribute parameter may be set by calling a function interface provided by a horizontal status bar management module (status bar manager) or by the foldable-screen management module calling a function interface provided by a horizontal status bar management module. The setting process may also be implemented by calling the function StatusBarManager.disable() or through a function call process corresponding to a function that has a similar function. This is not limited herein.

304: Receive a notification message sent by the second application.

It may be understood that the second application that sends the notification message may be different from the application to which the interface of the first application belongs. In some other embodiments, the second application that sends the notification message may alternatively be the same as the application to which the interface of the first application belongs. This is not limited herein.

305: Determine whether the value of the second attribute parameter is a state value corresponding to disabling pull-down of the status bar.

If a result of the determining is yes, step 306 below is performed to disable pull-down of the status bar by the user and skip displaying the banner notification.

If a result of the determining is no, step 307 below of a process of determining the value of the first attribute parameter is further performed.

For example, the value of the second attribute parameter may be, for example, a state value correspondingly set for "DISABLE_EXPAND". In this embodiment of this application, a value of the attribute parameter "DISABLE_EXPAND" may be preset to 1 to indicate true, that is, disabling the user operation of pulling down the status bar. In this case, the result of the determining in step 305 performed by the mobile phone 100 is yes. The value of "DISABLE_EXPAND" being 0 may indicate false, that is, allowing the user operation of pulling down the status bar. In this case, the result of the determining in step 305 performed by the mobile phone 100 is no.

It should be noted herein that, for the first application running on the mobile phone 100 such as the camera application or a setting application running in the system, the value of the second attribute parameter "DISABLE_EXPAND" corresponding to a status bar pull-down panel may be set to 0 by default. In other words, the status bar pull-down panel is by default in a state in which pull-down of the status bar is allowed, and the mobile phone 100 is also allowed to display the banner notification. With the first application responding to a setting operation of the user or to adapt to a service requirement of the first application, for example, when the user sets the camera application by using the setting application so that the camera application enters the notification disabled state during running, or the camera application is set for better user experience to entering the notification disabled state when the user uses the rear selfie mode, the mobile phone 100 may first perform determining in step 305 to ensure that step 306 is performed preferentially according to a user requirement or an application service requirement.

When it is determined that the first application does not modify the default value of the second attribute parameter, that is, when the result of the determining in step 305 performed by the mobile phone 100 is no, the mobile phone 100 may continue to perform processes in steps 307 to 309 below, and continue to perform another control process for pull-down of the status bar and display of the banner notification.

306: Skip displaying the banner notification, and skip responding to a user operation when the user pulls down the status bar.

For example, when determining that the value of the second attribute parameter such as "DISABLE_EXPAND" is "1", that is, a state value of disabling pull-down of the status bar, the mobile phone 100 may control the state value on the displayed interface of the first application to indicate that the mobile phone 100 disables the operation of pulling down the status bar in the current display mode. In addition, because the attribute parameter "DISABLE_EXPAND" of disabling pull-down of the status bar is associated with the banner notification by default, in this case, the mobile phone 100 also disables display of the banner notification, that is, does not display the banner notification.

It may be understood that the banner notification is usually used to display the notification message sent by the second application (for example, Phone or WeChat^{™}).

307: Determine whether the value of the first attribute parameter is a state value corresponding to disabling pull-down of the status bar and allowing display of the banner notification.

If a result of the determining is yes, step 308 below is performed to disable the operation of pulling down the status bar and display the banner notification.

If a result of the determining is no, step 309 below is performed to allow the operation of pulling down the status bar and display the banner notification.

For example, the value of the first attribute parameter may be, for example, a state value correspondingly set for "DISABLE_EXPAND_EXCEPT_HEADSUP". In this embodiment of this application, the value of the attribute parameter "DISABLE_EXPAND_EXCEPT_HEADSUP" may be preset to 1 to indicate true, that is, disabling the user operation of pulling down the status bar and allowing display of the banner notification. In this case, the result of the determining in step 307 performed by the mobile phone 100 is yes. The value of "DISABLE_EXPAND_EXCEPT_HEADSUP" may be 0 to indicate false, that is, skipping disabling or allowing the user operation of pulling down the status bar and allowing display of the banner notification. In this case, the result of determining in step 307 performed by the mobile phone 100 is no.

It may be understood that after executing the determining process in step 305 to determine that the related application does not change/set a default value of a related attribute parameter of the notification disabled state, the mobile phone 100 may further perform this step to determine whether a state in which pull-down of the status bar is disabled and display of the banner notification is allowed or a state in which pull-down of the status bar is allowed and display of the banner notification is allowed is set for interfaces of some applications. In some embodiments, the latter may also be described as a case in which the notification disabled state is not set, or the like. This is not limited herein.

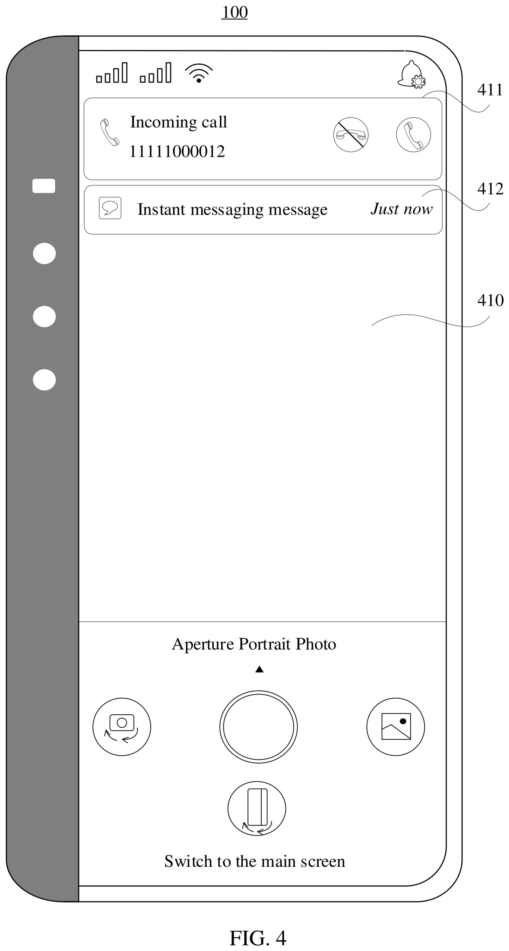

For example, FIG. 4 is a diagram of an interface of displaying a banner notification on a mobile phone according to an embodiment of this application.

As shown in FIG. 4, when displaying a shooting interface 410 in a rear selfie mode after entering an immersive state, the foldable-screen mobile phone 100 may display a banner notification 411 when receiving an incoming call, or display a banner notification 412 when receiving an SMS message, or the like. In this case, the mobile phone 100 may prompt for some important notification messages in time in a notification form, for example, an incoming call reminder and an instant messaging message. This helps improve use experience of users and provide an appropriate immersive state for the users.

In some embodiments, the terminal device used by the user may alternatively be a tablet computer, a notebook, or the like. This is not limited herein.

It may be understood that, for the banner notification displayed by the terminal device such as the mobile phone 100, the user may further tap to view detailed content, or may slide leftward or rightward to perform an operation such as deletion or neglect, or may pull down to view a part of content, or may pull up to retract the banner notification to a notification list of a status bar. For a specific implementation process in which the mobile phone 100 responds to these operations of the user for the banner notification, refer to detailed descriptions below with reference to a related flowchart. Details are not described herein.

308: Display the banner notification, and respond to a user operation when the user pulls down the status bar.

For example, if the mobile phone 100 performs step 307 and determines that the value of the second attribute parameter is the state value corresponding to disabling pull-down of the status bar and allowing display of the banner notification, the mobile phone 100 may respond to the operation of pulling down the status bar by the user and display the notification list or a control center. In addition, when the mobile phone 100 displays the interface of the first application, the mobile phone 100 may also display, by using a banner notification, a notification message sent by another application, for example, an incoming call reminder and an instant messaging message of an application such as Phone or WeChat^{™}.This is not limited herein.

In this case, the mobile phone 100 may respond to requirements of some specific applications, or may be set based on an application setting or a user setting. Therefore, when the interface of the first application is displayed, user experience for the immersive state can be avoided from being disturbed when the user accidentally performs the operation of pulling down the status bar, and some important notification messages can be prompted for in time, that is, banner notifications. In this way, the foregoing two user requirements can be balanced, which helps improve use experience of using the terminal device such as the mobile phone by the user.

309: Display the banner notification, and respond to a user operation when the user pulls down the status bar.

For example, when displaying the interface of the first application, the mobile phone 100 may respond to the operation of pulling down the status bar by the user to view the notification and the control center, and display the banner notification at the same time. Similarly, the banner notification may show a notification message sent by another application, for example, an incoming call reminder and an instant messaging message of an application such as Phone or WeChat^{™}. This is not limited herein.

In this embodiment of this application, when the value of the first attribute parameter is set to "1", a state that is correspondingly presented by the mobile phone 100 and in which the operation of pulling down the status bar by the user is disabled but the banner notification can be displayed in the status bar in the interface of the first application may be denoted as a "first state". When the value of the second attribute parameter is set to "1", a state that is correspondingly presented by the mobile phone 100 and in which the operation of pulling down the status bar by the user is disabled and the banner notification is not displayed in the status bar in the interface of the first application may be denoted as a "second state". In addition, when the value of the second attribute parameter is set to "0" and the value of the first attribute parameter is also "0", a state that is correspondingly presented by the mobile phone 100 and in which the operation of pulling down the status bar by the user is allowed and the banner notification can be displayed in the status bar in the interface of the first application may be denoted as a "third state" for differentiation.

Based on the procedure of executing steps 301 to 309 shown in FIG. 3A and FIG. 3B, the mobile phone 100 may correspondingly control, based on a user setting or a service requirement of a related application, status bars of some application interfaces to have the "first state", or status bars of some application interfaces to have the "second state", or a status bar of an application interface to have the "third state". In this way, different use experience requirements of the user can be satisfied, or different service requirements of related applications can be better adapted.

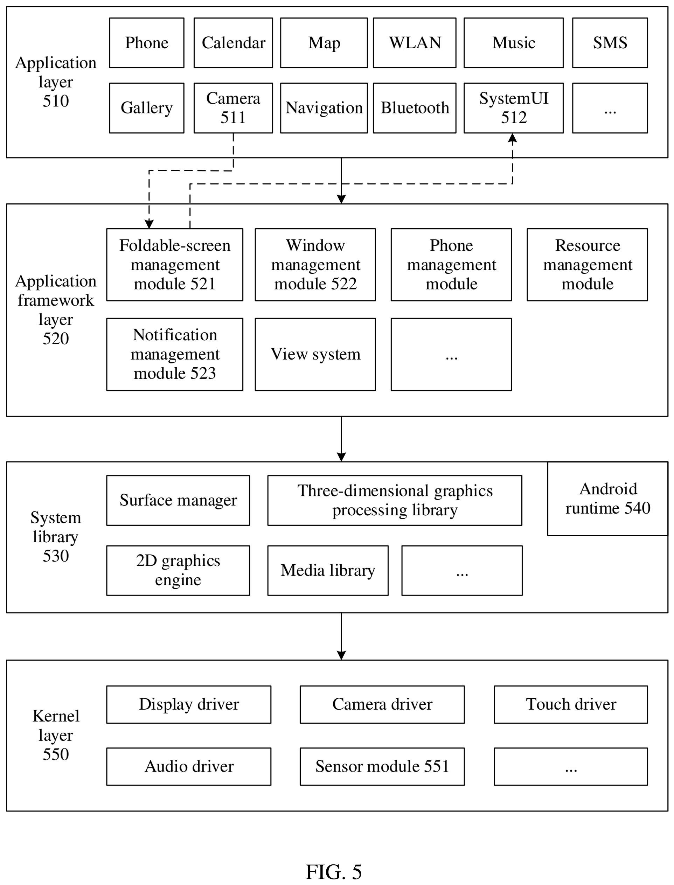

FIG. 5 is a diagram of a software structure of an operating system of a terminal device according to an embodiment of this application. It may be understood that the terminal device may be a terminal electronic device such as a mobile phone 100, a tablet computer, or a notebook. The following continues to describe in detail a software structure of an operating system carried by the terminal device by using the mobile phone 100 as an example.

As shown in FIG. 5, the operating system of the mobile phone 100 may use a layered architecture. In the layered architecture, software is divided into several layers, and each layer has a clear role and task. The layers communicate with each other through a software interface. In some embodiments, the Android system is divided into four layers that are respectively an application layer, an application framework layer, Android runtime (Android runtime) and a system library, and a kernel layer from top to bottom. For ease of description, the system layers and layer structures are numbered when the following describes the system software structure.

As shown in FIG. 5, the application layer 510 may include a series of application packages. The application packages may include applications such as Camera 511, Gallery, Calendar, Phone, Map, Navigation, WLAN, Bluetooth, Music, Messages, and a system user interface (system user interface, SystemUI) 512. The SystemUI 512 may be configured to receive and store a value, set by the foldable-screen management module 521, of an attribute parameter corresponding to a window or an interface. This includes setting values of related attribute parameters such as whether to allow pull-down of the status bar and whether to display the banner notification. Further, when a notification reminder needs to be displayed in a related window or interface, or an operation performed by a user on a status bar pull-down panel is detected, it may be determined based on a specified value of an attribute parameter whether to respond to a user operation or whether to display a banner notification.

The application framework layer 520 provides an application programming interface (application programming interface, API) and a programming framework for an application in the application layer. The application framework layer includes some predefined functions.

The application framework layer may include a foldable-screen management module (fold screen manager, FSM) 521, a window management module (windows manager service, WMS) 522, a view system, a phone management module, a resource management module, a notification management module (notification manager service, NMS) 523, and the like.

The foldable-screen management module 521 may also be referred to as a foldable-screen management service or a foldable screen manager, and is configured to manage a window or an interface of a foldable-screen device. This includes managing display content of a window or an interface in a corresponding display mode based on different display modes of the foldable-screen device, and setting whether the user operation for the status bar pull-down panel is allowed, whether to display the banner notification, and the like for the window or the interface in the corresponding display mode. In this embodiment of this application, the foldable-screen management service 521 may set, by using a StatusBarManager.disable() function, content for the window or the interface such as whether to allow pull-down of the status bar and whether to display the banner notification. In some embodiments, a call interface corresponding to the function may be a system interface, or may be a call interface provided by a status bar management service or referred to as a status bar management module. This is not limited herein.

The window management module 522 may also be referred to as the window management service or the window manager to manage a window program. The window management module 522 may obtain a size of a display, determine whether a status bar exists, lock a screen, take a screenshot, and the like. In this embodiment of this application, the window management module 522 may interact with an application such as a camera application to obtain a message of switching a shooting interface or a window to a corresponding display mode, and notify the foldable-screen management module 521 that a device state changes. Details are described below, and are not described herein.

The notification management module 523 may also be referred to as a notification management service or a notification manager, and is configured to enable an application to display notification information in a status bar, and may be configured to convey a notification message that may automatically disappear after a short stay without requiring user interaction. For example, the notification management module 523 is configured to notify download completion, provide a message reminder, and the like. The notification management module 523 may alternatively be a notification that appears in a top status bar of a system in a form of a graph or scroll bar text, for example, a notification of an application running in the background, or a notification that appears on a screen in a form of a dialog window. For example, text information is prompted in the status bar, a prompt tone is made, the terminal device vibrates, or an indicator light blinks.

The view system includes visual controls such as a text display control and a picture display control. The view system may be configured to create an application. A display interface may be formed by one or more views. For example, the display interface including a Messages notification icon may include a text display view and a picture display view.

The phone management module is configured to provide a communication function of the mobile phone 100, for example, management of a call status (including answering, hanging up, and the like).

The resource management module provides various resources for an application, such as a localized character string, an icon, a picture, a layout file, and a video file.

The system library 530 may include a plurality of functional modules, for example, a surface manager (surface manager), media libraries (media libraries), a three-dimensional graphics processing library (for example, OpenGL ES), and a 2D graphics engine (for example, SGL). The surface manager is used to manage a display subsystem and provide fusion of 2D and 3D layers for a plurality of applications.

The media library supports playback and recording in a plurality of common audio and video formats, and also supports static image files, and the like. The media library may support a plurality of audio and video coding formats, for example, MPEG4, H.264, MP3, AAC, AMR, JPG, and PNG.

The three-dimensional graphics processing library is configured to implement three-dimensional graphics drawing, image rendering and composition, layer processing, and the like.

The 2D graphics engine is a drawing engine of 2D drawing.

The Android runtime (Android Runtime) 540 includes a kernel library and a virtual machine. The Android runtime 540 is responsible for scheduling and management of the Android system.

The kernel library includes two parts: one part is a performance function that needs to be called by using a Java language, and the other part is a kernel library of Android.

The application layer 510 and the application framework layer 520 run in the virtual machine. The virtual machine executes Java files of the application layer and the application framework layer as binary files. The virtual machine is configured to execute functions such as object lifecycle management, stack management, thread management, security and exception management, and garbage collection.

The kernel layer 550 is a layer between hardware and software. The kernel layer 550 includes at least a display driver, a camera driver, an audio driver, and a sensor module 551. Optionally, the sensor module 551 may be a driver or a part of a functional module of a driver program. In this embodiment of this application, the sensor module 551 may report a flip event and the like correspondingly determined based on data collected by the gyroscope sensor, the acceleration sensor, and the like of the mobile phone 100 to a caller application, such as the camera application 511, to detect an operation of flipping the mobile phone by the user or an operation of unfolding a foldable screen and further trigger switching of a front-facing/rear-facing camera by the camera application 511 to a corresponding shooting mode. For details, refer to related descriptions below. Details are not described herein.

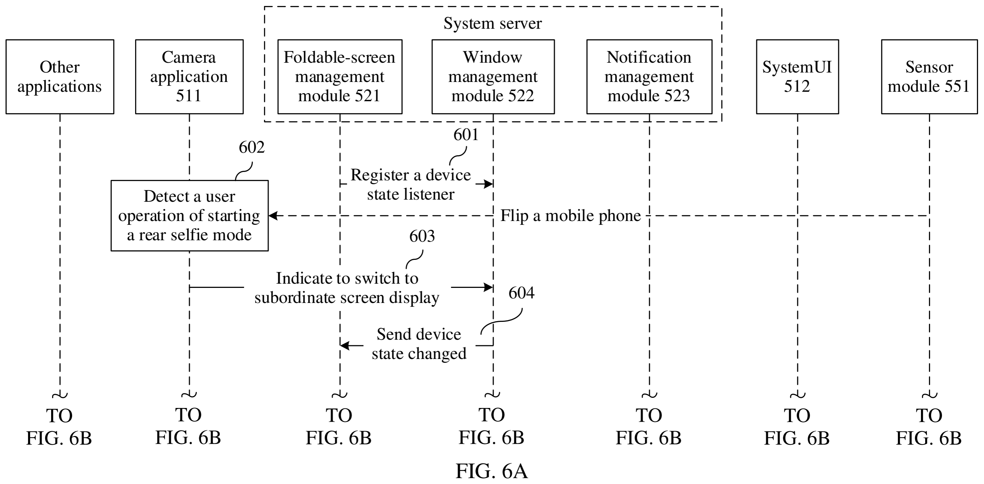

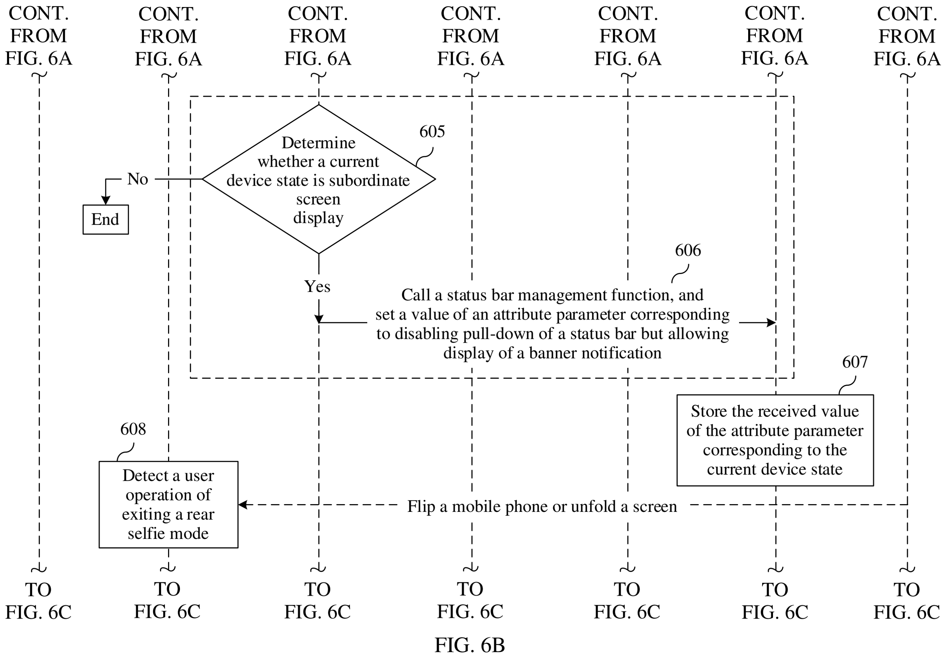

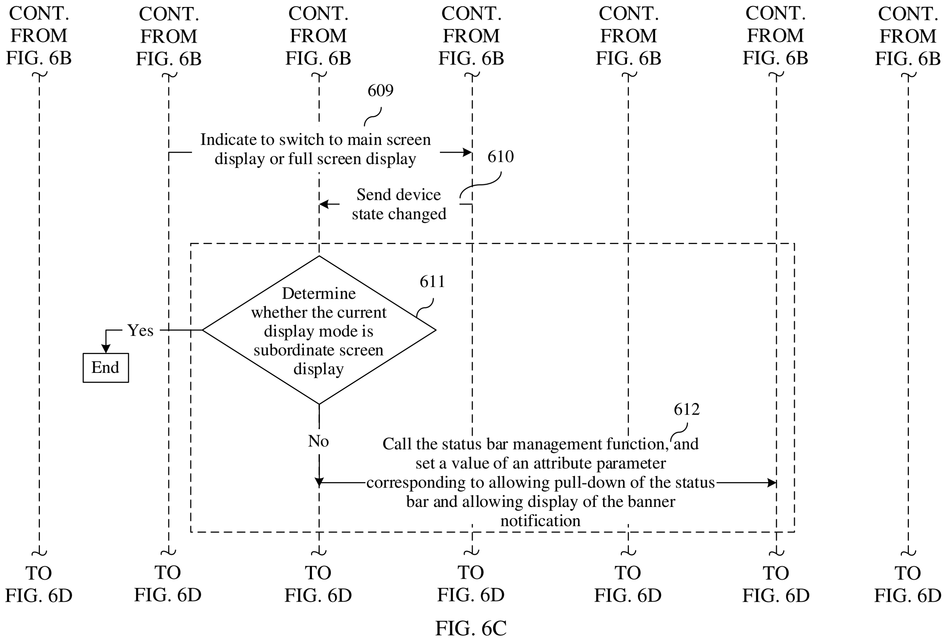

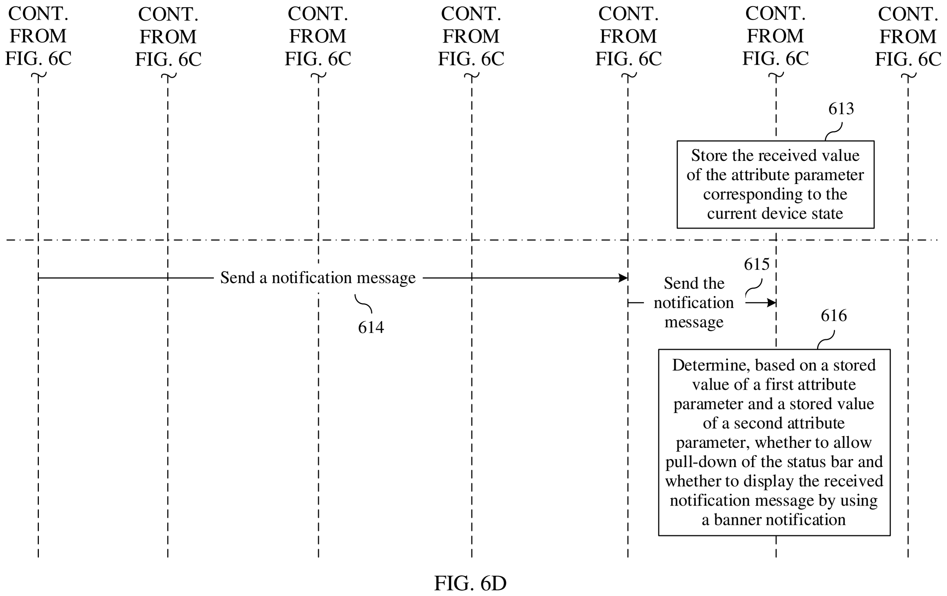

Based on the system software structure shown in FIG. 5, the following describes an interaction implementation process of a notification management method provided in this application with reference to FIG. 6A, FIG. 6B, FIG. 6C, and FIG. 6D.

FIG. 6A, FIG. 6B, FIG. 6C, and FIG. 6D are a diagram of an implementation of an interaction procedure of a display method according to an embodiment of this application. It may be understood that subjects related in steps in the interaction procedure may include a sensor module 551, a SystemUI 512, a notification management module 523, a window management module 522, a foldable-screen management module 521, a camera application 511, and another application that generates a notification message.

Specifically, as shown in FIG. 6A, FIG. 6B, FIG. 6C, and FIG. 6D, the interaction procedure may include the following steps.

601: The foldable-screen management module 521 registers a device state listener with the window management module 522.

For example, the foldable-screen management module 521 may set a device state listener to the window management module 522 by using a function "DevicePreStateListener", to listen to a screen state used by the mobile phone 100 to display an interface of a related application. The screen state may also be used to determine a display mode used by the mobile phone 100. In this embodiment of this application, a foldable-screen device is used as an example. A screen state or referred to as a display mode used by the mobile phone 100 to display an interface of a related application may include full screen display, main screen display, or subordinate screen display. Based on the foregoing disposed device state listener, the foldable-screen management module 521 of the mobile phone 100 may listen to and obtain, from the window management module 522, a specific device state or referred to as a display mode of the mobile phone 100 in full screen display, main screen display, or subordinate screen display to display a current interface. The current interface may be, for example, a shooting interface of a camera application, or may be an interface of another application. This is not limited herein.

It may be understood that, when the mobile phone 100 runs the camera application, if it is detected that a screen currently viewed or operated by the user is the main screen or the full screen of the mobile phone 100, the mobile phone 100 may currently display a corresponding shooting interface by using the main screen or the full screen. If the mobile phone 100 detects that the user flips the mobile phone 100 and views or operates an interface displayed on the subordinate screen, the mobile phone 100 may also currently display a corresponding shooting interface by using the subordinate screen. This is not limited herein.

602: The camera application 511 detects a user operation of enabling a rear selfie mode.

For example, the user operation of enabling the rear selfie mode may include an operation of tapping a control corresponding to "Switch to the subordinate screen" on the shooting interface of the camera application by the user to enable the rear selfie mode, or may include an operation of flipping the mobile phone by the user, or the like. The user operation of disabling the rear selfie mode may trigger the rear selfie mode to be enabled. This is not limited herein.

In some embodiments, the user may perform an operation of tapping a "Flip" control on the shooting interface of the camera application 511 or a shooting control corresponding to switching to the rear selfie mode, to enable the rear selfie mode. Correspondingly, the camera application 511 running on the mobile phone 100 may correspondingly detect the operation of enabling the rear selfie mode. It may be understood that, after the user performs the operation and selects the rear selfie mode, if the mobile phone 100 detects that the user is still using the main screen or the full screen and does not use the subordinate screen to view displayed content or perform a related operation, the mobile phone 100 may display prompt information in this case, to prompt the user to flip or fold the mobile phone 100, and perform a shooting operation or another related operation by using the subordinate screen.

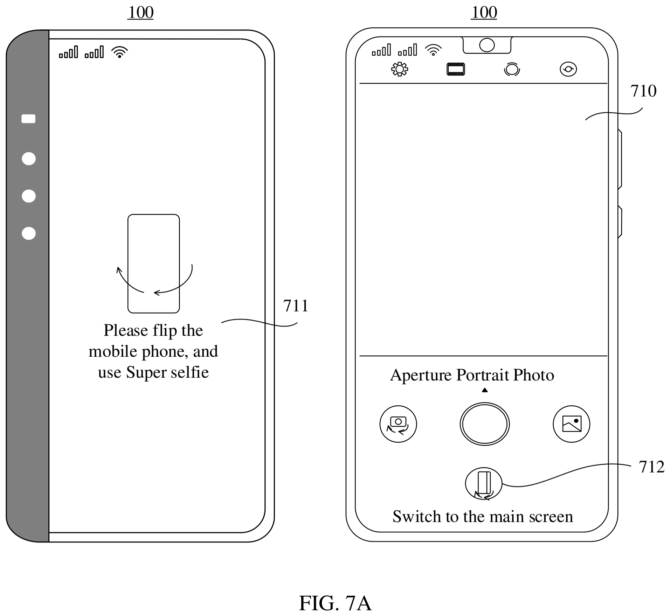

For example, when the mobile phone 100 runs the camera application, if the mobile phone 100 is in a folded state, the mobile phone 100 may display a shooting interface 710 shown in FIG. 7A on the main screen in response to a tap operation performed by the user to flip a camera and switch to the rear selfie mode. The shooting interface 710 may also display a prompt icon 712 of "Switch to the main screen" and the like in the shooting interface 710. This is not limited herein. In addition, the mobile phone 100 may further display a prompt interface 711 on the subordinate screen. Content such as "Please flip the mobile phone and use Super selfie" may be displayed on the interface 711, to prompt the user to flip the mobile phone. If the user flips the mobile phone according to the prompt, the super selfie function of the camera application 511 running on the mobile phone 100 may be used.

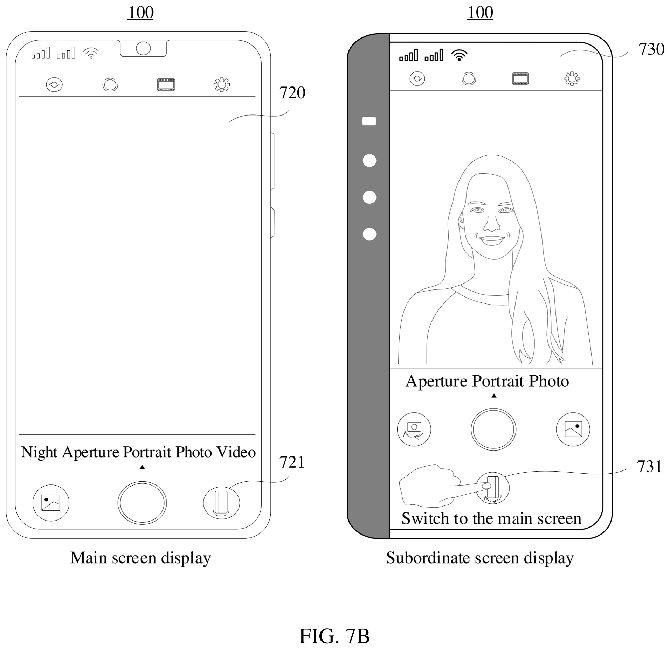

If the mobile phone 100 is in the folded state, and the user is viewing displayed content of the main screen and switches to a camera on the main screen for shooting or performs a touch operation on the main screen, the mobile phone 100 may display, by using the main screen, a shooting interface 720 shown in FIG. 7B. A switch control 721 may be displayed on the shooting interface, and the switch control 721 may prompt the user to switch to the subordinate screen for display to use the rear selfie mode. The user may tap the switch control 721 to switch to the subordinate screen to use the rear selfie mode. Correspondingly, the mobile phone 100 enters the rear selfie mode or referred to as a super selfie mode.

In some other embodiments, in a process in which the mobile phone 100 runs the camera application 511, the operation of flipping the mobile phone 100 by the user may also be detected. For example, the sensor module 551 of the mobile phone 100 may transmit, to the camera application 511, a flip event determined based on sensor data detected by a gyroscope sensor, an acceleration sensor, or the like. Based on the received sensor data, the camera application 551 may identify an action of flipping the mobile phone by the user, and switch a current shooting mode to the rear selfie mode.

When the user flips the mobile phone 100 so that the subordinate screen faces the user, the mobile phone 100 may display, by using the subordinate screen, a shooting interface 730 shown in FIG. 7B. In this case, a switch control 731 on the shooting interface 730 correspondingly changes to a "Switch to the main screen" operation control. In this case, the user may use the super selfie function of the mobile phone to shoot a portrait of the user, a group photo of multiple persons, or the like.

603: The camera application 511 indicates the window management module 522 to switch to the subordinate screen for display.

For example, after the camera application 511 detects the user operation of enabling the rear selfie mode when performing step 602, the camera application 511 may call a function "SetDisplayMode()" to set a related parameter of a to-be-switched-to display mode or a related parameter of a to-be-switched-to device state, to indicate the window management module 522 located at the application framework layer 520 to switch a window display mode (display mode) of the shooting interface to a corresponding display mode. For example, the camera application 511 may perform step 603 to introduce, by using a function "SetDisplaymode(3)", a device state parameter "DisplayModeSub" corresponding to subordinate screen display. Based on the function, the camera application 511 may indicate the window management module 522 to switch a displayed window corresponding to the shooting interface to a subordinate screen display state or referred to as a subordinate screen display mode, that is, a display mode adapted to a size of the subordinate screen.

Accordingly, when performing step 609 below, the camera application 511 may introduce, by using a function "SetDisplaymode(2)", a device state parameter corresponding to main screen display "DisplayModeMain", or introduce, by using a function "SetDisplaymode(1)", a device state parameter corresponding to main screen display "DisplayModeFull". In some other embodiments, the camera application 511 may also perform step 603 and an indicate-to-switch process in step 609 below by calling another function having a similar setting function. This is not limited herein.

It may be understood that when the camera application 511 of the mobile phone 100 indicates the window management module 522 to switch to the subordinate screen display mode, the user may flip the mobile phone 100 to a device state in which the subordinate screen faces the user, or may continue to maintain a device state in which the main screen faces the user. For example, the user does not flip the mobile phone after tapping a "Switch to the subordinate screen" control on the shooting interface displayed on the main screen of the mobile phone 100. In this case, the window management module 522 of the mobile phone 100 may control to still display, on the shooting interface of the camera application, a related icon or related information that prompts the user to flip the mobile phone, and may continue to listen to a change of the device state. When detecting that the screen currently displaying the shooting interface has been switched from the main screen to the subordinate screen, the window management module 522 may perform step 604 below to send a change status of the device state to the foldable-screen management module 521.

604: The window management module 522 sends device state changed to the foldable-screen management module 521.

For example, the window management module 522 may introduce, by using a callback function "OnScreenDisplayModeChange", a parameter value after the current device state changes such as a parameter value corresponding to full (full screen), main (main screen), or sub (suboridinate screen), and send, to the foldable-screen management module 521, a message indicating that the device state has changed. In addition, the window management module 522 may notify, by using a callback function "OnConfigChange", the camera application 511 of the message indicating that the corresponding device state has changed, and the camera application 511 may correspondingly call a system rendering process to draw an application interface displayed corresponding to the device state.

It may be understood that the device state change may include a change of switching the shooting interface of the camera application from being display by using the main screen or the full screen to being displayed by using the subordinate screen. This is not limited herein.

605: The foldable-screen management module 521 determines whether a current device state is subordinate screen display.

If a result of the determining is yes, step 606 below is further performed.

If a result of the determining is no, execution ends.

For example, the foldable-screen management module 521 may determine, based on state information such as the detected device state sent by the window management module 522 and the device state change notified by the window management module 522, whether a display mode currently used by the mobile phone 100 is subordinate screen display. In some other embodiments, the foldable-screen management module 521 of the mobile phone 100 may also determine, based on screen device identification information that is of the currently displayed shooting interface and that is obtained by the window management module 522 from the system, whether the current device state is subordinate screen display.

For example, if the foldable-screen management module 521 determines that the mobile phone 100 currently uses the subordinate screen to display the shooting interface, a corresponding result of the determining is yes, and step 606 below may be further performed to set a related attribute parameter of displaying the shooting interface on the subordinate screen. If the foldable-screen management module 521 determines that the mobile phone 100 currently uses the full screen or the main screen to display the shooting interface, a corresponding result of determining is no, and there is no need to further perform any step, that is, execution ends.

606: The foldable-screen management module 521 calls a status bar management function, and sets a value of an attribute parameter corresponding to disabling pull-down of the status bar but allowing display of the banner notification for the SystemUI 512.

For example, a value corresponding to a first attribute parameter "DISABLE_EXPAND_EXCEPT_HEADSUP" is set by calling the status bar management function StatusBarManager.disable(). For example, the value corresponding to "DISABLE_EXPAND_EXCEPT_HEADSUP" is set to "1" or not equal to 0, that is, "DISABLE_EXPAND_EXCEPT_HEADSUP!=0". It may be learned from related descriptions in step 302 that the first attribute parameter is an attribute parameter of "disabling pull-down of the status bar but allowing display of the banner notification" correspondingly set for the banner notification.

It may be understood that "DISABLE_EXPAND_EXCEPT_HEADSUP" cannot be used as a limitation on the first attribute parameter. In some other embodiments, another attribute parameter used to set "disabling pull-down of the status bar but allowing display of the banner notification" may also be preset in a terminal device such as the mobile phone 100. This is not limited herein.

607: The SystemUI 512 stores the received value of the attribute parameter corresponding to the current device state.

For example, the SystemUI 512 may receive the value and the first attribute parameter that are correspondingly set when the foldable-screen management module 521 performs step 606, and store the value and the first attribute parameter corresponding to the current device state (or referred to as the display mode). For the foregoing example, the foldable-screen management module 521 calls the status bar management function to correspondingly set an attribute parameter value corresponding to disabling pull-down of the status bar but allowing display of the banner notification in the "subordinate screen display" state. The SystemUI 512 may store the specified attribute parameter and the value corresponding to the "subordinate screen display" state as "DISABLE_EXPAND_EXCEPT_HEADSUP!=0".

In this embodiment of this application, the SystemUI 512 may store the specified value of the first attribute parameter corresponding to the current "subordinate screen display" state or mode. Therefore, during display of the shooting interface in the rear selfie mode on the mobile phone 100, a notification message sent to another application can be displayed to the user by using a banner notification based on the foregoing stored attribute parameter.

608: The camera application 511 detects a user operation of exiting rear shooting.

For example, the user operation of exiting the rear selfie mode may include tapping a control of switching to the main screen on the shooting interface of the camera application by the user. The operation of exiting the rear selfie mode may also include an operation of flipping the mobile phone by the user. The operation of exiting the rear selfie mode may also include an operation of switching the mobile phone 100 from the folded state to an unfolded state to unfold the screen, or the like. This is not limited herein.

It may be understood that in a process in which the user flips the mobile phone 100 to switch a state of displaying the shooting interface on the subordinate screen to a state of displaying the shooting interface on the main screen, the sensor module 551 of the mobile phone 100 may correspondingly transmit, to the camera application 511, the sensor data detected by the gyroscope sensor, the acceleration sensor, and the like, so that the camera application 511 identifies the flip action of the user. When the user switches the mobile phone 100 from the folded state to the unfolded state to unfold the screen, the sensor module 551 of the mobile phone 100 may correspondingly transmit, to the camera application 511, the sensor data detected by the gyroscope sensor, the acceleration sensor, the Hall sensor, and the like, so that the camera application 511 identifies an operation of unfolding the screen of the foldable-screen device by the user.

609: The camera application 511 indicates the window management module 522 to switch to the main screen or the full screen for display.

For example, after performing step 608 and detecting the user operation of exiting the rear selfie mode, the camera application 511 may notify the window management module 522 located at the application framework layer 520 to trigger the window management module 522 to perform switching from a window display mode (display mode) of displaying the shooting interface to the main screen display state or the full screen display state. For a specific process in which the camera application 511 calls a function "SetDisplayMode()" to set a parameter related to the display mode that needs to be switched or a parameter related to the device state, refer to the related descriptions in step 603. Details are not described herein again.

610: The window management module 522 sends device state changed to the foldable-screen management module 521.

For example, the window management module 522 may send, to the foldable-screen management module 521 by using a callback "OnScreenDisplayModeChange" or another function, a state parameter or state information indicating that the device state has changed, to notify the foldable-screen management module 521 that the current device state has changed. For details, refer to the related descriptions in step 604. Details are not described herein again.

611: The foldable-screen management module 521 determines whether the current device state is subordinate screen display.

If a result of the determining is no, step 612 below is further performed.

If a result of the determining is yes, execution ends.

For example, based on device state changed correspondingly sent by the window management module 522 performing step 610 and information such as a notification indicating device state changed that is received before the window management module 522 performs step 610, the foldable-screen management module 521 of the mobile phone 100 may determine whether the device state currently used by the mobile phone 100 is subordinate screen display. In some other embodiments, the foldable-screen management module 521 of the mobile phone 100 may also determine, based on the screen device identification information that is of the currently displayed shooting interface and that is obtained by the window management module 522 from the system, whether the current device state is subordinate screen display.

For example, if the foldable-screen management module 521 determines that the mobile phone 100 currently uses the main screen or the subordinate screen to display the shooting interface, a corresponding result of the determining is no, and step 612 below may be further performed to set a related attribute parameter of displaying the shooting interface on the main screen or the full screen. If the foldable-screen management module 521 determines that the mobile phone 100 currently uses the subordinate screen to display the shooting interface, a corresponding result of determining is no, and there is no need to further perform any step, that is, execution ends.

612: The foldable-screen management module 521 calls a status bar management function, and sets a value of an attribute parameter corresponding to allowing pull-down and allowing display of the banner notification for the SystemUI 512.

For example, the foldable-screen management module 521 of the mobile phone 100 may set, by calling the function StatusBarManager.disable(), a value corresponding to a second attribute parameter "DISABLE_EXPAND". For example, the value corresponding to "DISABLE_EXPAND" is set to "1" or "0". When the value corresponding to "DISABLE_EXPAND" is "0", it indicates that the operation of pulling down the status bar is allowed and the banner notification is allowed. In some other embodiments, if the value corresponding to "DISABLE_EXPAND" is set to "1", it may indicate that the operation of pulling down the status bar is disabled and display of the banner notification is disabled.

It may be understood that "DISABLE_EXPAND_EXCEPT_HEADSUP" cannot be used as a limitation on the second attribute parameter. In some other embodiments, another attribute parameter used to set "disabling pull-down of the status bar and disabling display of the banner notification" may also be preset in a terminal device such as the mobile phone 100. This is not limited herein.

613: The SystemUI 512 stores the received value of the attribute parameter corresponding to the current device state.

For example, the value corresponding to the second attribute parameter "DISABLE_EXPAND" is set by calling the status bar management function StatusBarManager.disable(). For example, the value corresponding to "DISABLE_EXPAND_EXCEPT_HEADSUP" is set to "0" by default. By default, the user operation of allowing the main screen display state or the full screen display state and allowing pull-down of the status bar is allowed, and the banner notification may be displayed. In this case, the SystemUI 512 may store the value "0" of the second attribute parameter corresponding to the main screen display state or the full screen display state of the foldable-screen mobile phone 100.

In addition, if the application sets, in response to a setting operation or an actual service requirement of the user, the user operation of disabling pull-down of the status bar and does not display the banner notification on the shooting interface or an interface of another application, the SystemUI 512 may also correspondingly store a value of a related attribute parameter and a corresponding display state or referred to as a display mode in response to a setting of an application such as the camera application 511 by using the foldable-screen management module 521. In this way, when the mobile phone 100 displays the shooting interface by using the main screen, the SystemUI 512 may disable the operation of pulling down the status bar by the user, and does not display a banner notification of a notification message sent for another application.

It may be understood that in this embodiment of this application, with reference to the value of the first attribute parameter stored in step 607 and the value of the second attribute parameter stored in step 613, the SystemUI 512 may execute a determining process of steps 304 to 308 and an execution process of a corresponding result of determining. For details, refer to related descriptions of step 616 below. Details are not described herein.

It may be understood that, after the foregoing structures in the operating system of the mobile phone 100 complete execution of step content in steps 601 to 613, a process of controlling display of a banner notification on a corresponding interface in different display modes or referred to as device states in steps 614 to 616 below may be further executed.

614: Another application sends a notification message to the notification management module 523.

615: The notification management module 523 sends the notification message to the SystemUI 512.

616: The SystemUI 512 determines, based on the stored value of the first attribute parameter and the stored value of the second attribute parameter, whether to allow pull-down of the status bar and whether to display the received notification message by using a banner notification.

For example, the SystemUI 512 may call a correlation function in a command queue (command queue) to execute content correspondingly determined based on the values of the first attribute parameter and the second attribute parameter. For example, the SystemUI 512 may call a function panelsEnabled() in the command queue to execute the following content to determine that the operation of pulling down the status bar is allowed and a banner notification may be displayed:
"panelsEnabled()
(Disabled1&DISABLE_EXPAND)=0&&
(Disabled1&DISABLE_EXPAND_EXCEPT_HEADSUP)=0"
"Disabled1" indicates to set the attribute parameter "DISABLE_EXPAND" to a constant value 1. In this way, if the value of the attribute parameter "DISABLE_EXPAND" is "0", "(Disabled1&DISABLE_EXPAND)=0"; and if the value of the attribute parameter "DISABLE_EXPAND_EXCEPT_HEADSUP" is "0", "(Disabled1&DISABLE_EXPAND_EXCEPT_HEADSUP)=0". Further, an attribute parameter set in the function "panelsEnabled()" may indicate to allow pull-down of the status bar and display the banner notification.

For another example, the SystemUI 512 may call the function panelsEnabled() in the command queue to execute the following content to determine that the operation of pulling down the status bar is disabled but a banner notification may be displayed:
"panelsEnabled()
(Disabled1&DISABLE_EXPAND)=0&&
(Disabled1&DISABLE_EXPAND_EXCEPT_HEADSUP)!=0"

If the value of the attribute parameter DISABLE_EXPAND_EXCEPT_HEADSUP is not equal to 0 (that is, !=0), (Disabled1&DISABLE_EXPAND_EXCEPT_HEADSUP)!=0. Further, an attribute parameter set in the function "panelsEnabled()" may indicate to not allow (that is, disable) pull-down of the status bar but display the banner notification.

It may be understood that, for a case in which an application correspondingly sets, based on a setting operation of the user or a service requirement, disabling of pull-down of the status bar and disabling of display of the banner notification by using the foldable-screen management module 521 in step 613, applications such as the camera application may set the value of the second attribute parameter to "1" for the SystemUI 512. Correspondingly, the SystemUI 512 may also call the function panelsEnabled() in the command queue to execute the following content to determine that the operation of pulling down the status bar is disabled and display of a banner notification may be disabled:
"panelsEnabled()
(Disabled1&DISABLE_EXPAND)=1"

If the value of the attribute parameter DISABLE_EXPAND is 1, (Disabled1&DISABLE_EXPAND)=1. An attribute parameter set in the function "panelsEnabled()" may indicate to not allow pull-down of the status bar and not display the banner notification.

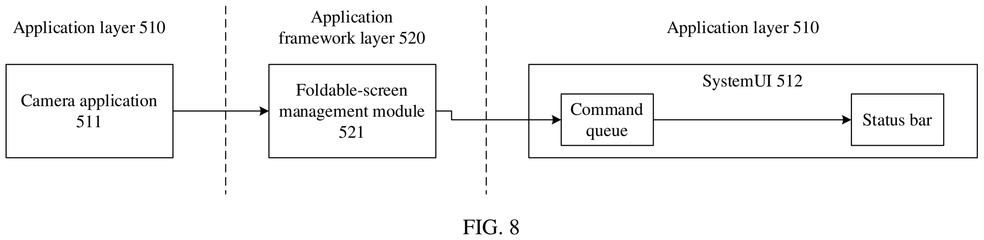

Based on a process of implementing steps 601 to step 616 in the interaction procedure shown in FIG. 6A, FIG. 6B, FIG. 6C, and FIG. 6D, the display method provided in this application corresponds to an implementation principle of the operating system of the terminal device such as the mobile phone 100. The following may be generally described with reference to FIG. 8.

FIG. 8 is a diagram of a principle of implementing a display method in an operating system according to an embodiment of this application.

As shown in FIG. 8, the camera application 511 located at the application layer 510 may call, by using the foldable-screen management module 521 of the application framework layer 520, a function interface provided by the status bar management module, and call a StatusBarManager.disable() function to set, for the SystemUI 512 located at the application layer 510, an attribute parameter indicating that pull-down of a status bar is disabled but display of a banner notification is allowed. In this embodiment of this application, the first attribute parameter, the second attribute parameter, and the like may be parameters that are set for a flag attribute of an interface (view). In some other embodiments, the attribute parameters may also be parameters correspondingly set by adjusting other attributes of interface display effect. This is not limited herein.

Still as shown in FIG. 8, a process of setting, for the SystemUI 512, the attribute parameter indicating that pull-down of the status bar is disabled but display of the banner notification is allowed may be specifically completed based on a related parameter of executing a corresponding function in the command queue (command queue) of the SystemUI 512. For example, the foldable-screen management module 521 may call StatusBarManager.disable() to set a value of an attribute parameter "DISABLE_EXPAND_EXCEPT_HEADSUP" and a value of "DISABLE_EXPAND" for the SystemUI 512. After completing the setting, the SystemUI 512 may control a user operation of pulling down the status bar is disabled for an interface displayed on a current screen but allow display of the banner notification to prompt the user, by executing a function in the command queue:
"panelsEnabled()
(Disabled1&DISABLE_EXPAND)=0&&
(Disabled1&DISABLE_EXPAND_EXCEPT_HEADSUP)!=0".

In this way, based on the display method provided in this application, the terminal device such as the mobile phone can set, according to a user experience requirement or an application service requirement, whether to disable the user operation of pulling down the status bar and whether to allow display of the banner notification to prompt the user. For example, in some no-disturbing immersive scenarios, pull-down of the status bar may be disabled, and the banner notification is not displayed, so that the user is not disturbed, thereby improving user experience. In some other immersive scenario that may accept appropriate disturbance, pull-down of the status bar may be disabled, but display of the banner notification is allowed, to avoid a case in which the user misses some important notification messages. This also helps improve user experience.

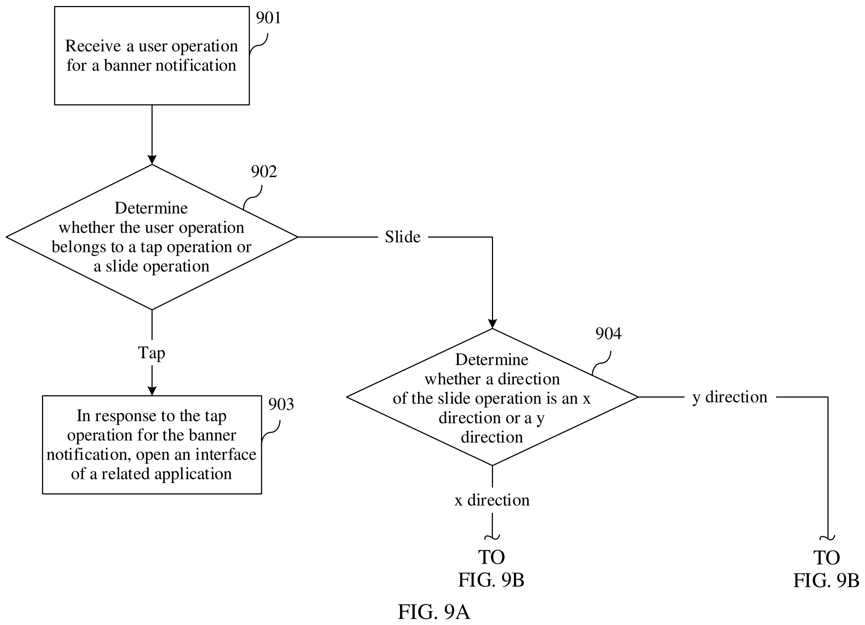

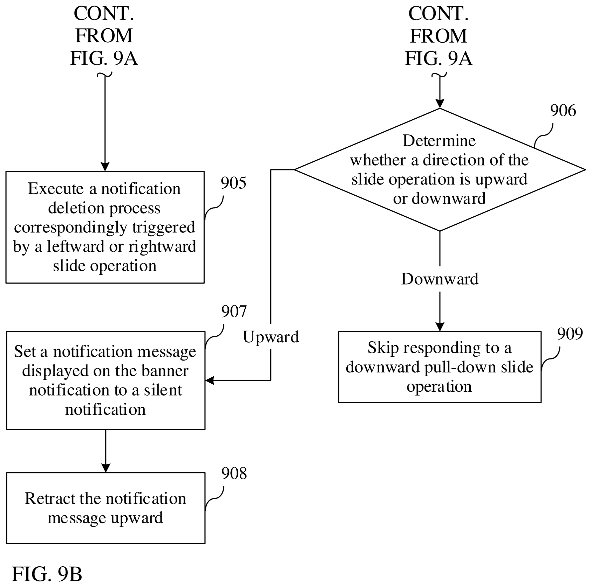

It may be understood that, when display of the banner notification is allowed, the user may perform a related operation such as viewing or setting the banner notification displayed on the terminal device such as the mobile phone. Some user operations may further complete a process of setting an attribute parameter indicating whether to display the banner notification. Specifically, description may be provided in detail below with reference to the flowchart shown in FIG. 9A and FIG. 9B.

FIG. 9A and FIG. 9B are a diagram of an implementation procedure of responding to a related operation performed by a user on a banner notification according to an embodiment of this application. It may be understood that each step in the implementation procedure shown in FIG. 9A and FIG. 9B may still be performed by the mobile phone 100. In some other embodiments, each step in the implementation procedure shown in FIG. 9A and FIG. 9B may also be performed by another terminal electronic device. This is not limited herein.

As shown in FIG. 9A and FIG. 9B, the implementation procedure may include the following steps.

901: Receive a user operation for a banner notification.

902: Determine whether the user operation belongs to a tap operation or a slide operation.

If a result of the determining is the tap operation, step 903 below may still be performed in response to the tap operation.

If a result of the determining is the slide operation, a determining process in step 904 below may be further performed.

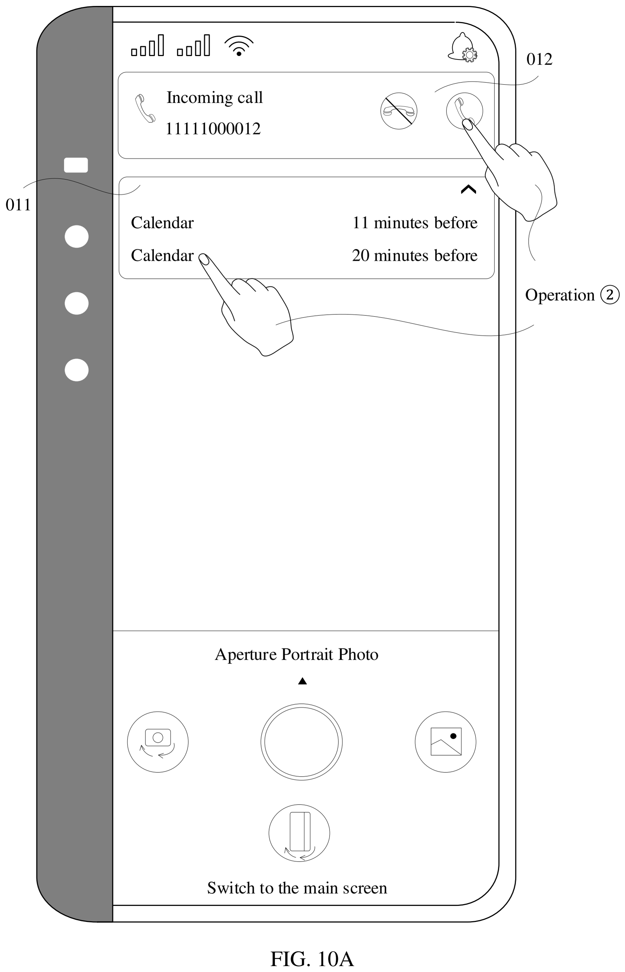

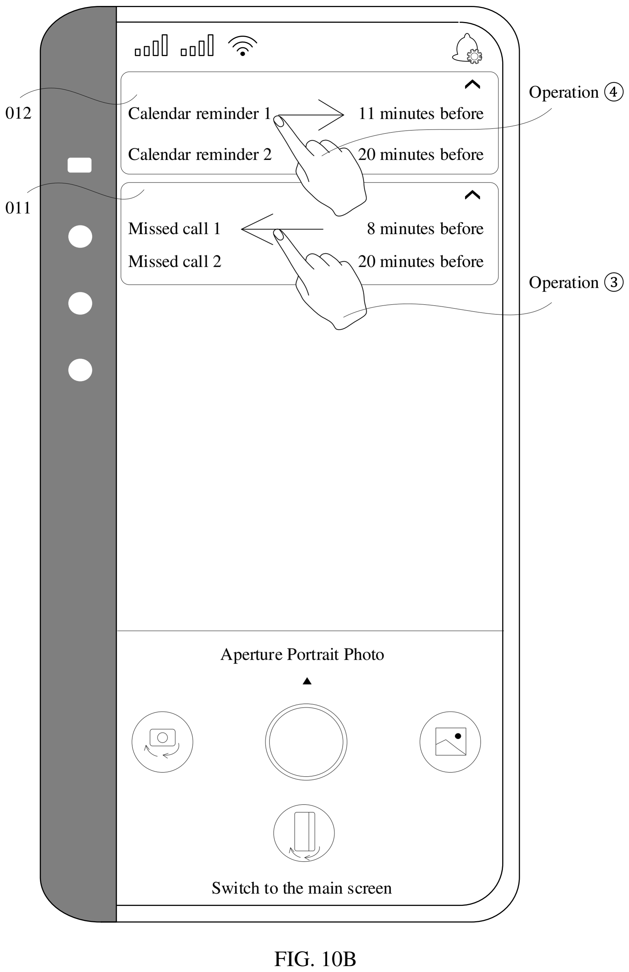

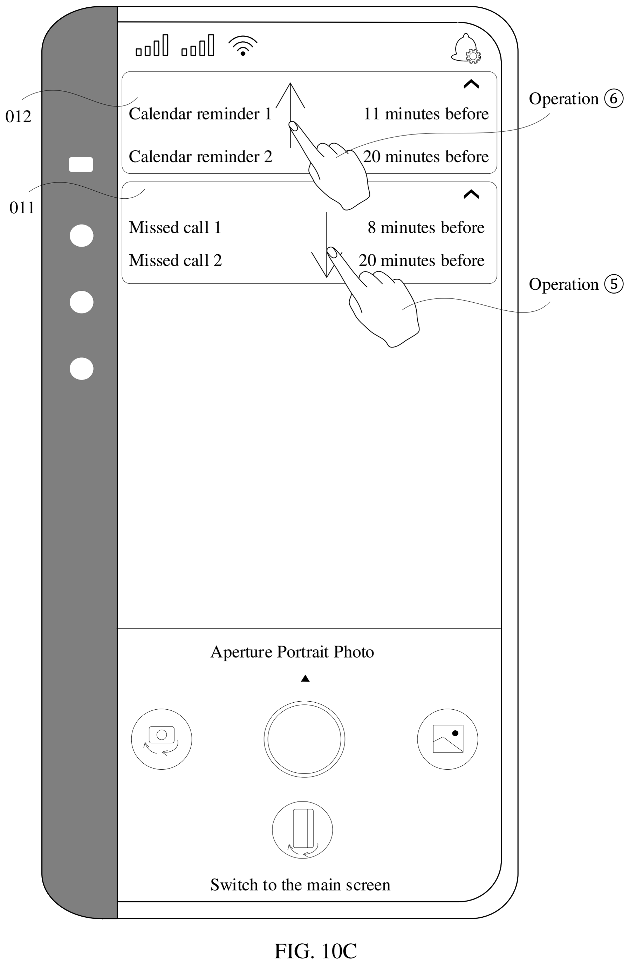

For example, for the tap operation, refer to an operation ② of tapping displayed content of a banner notification shown in FIG. 10A. For the slide operation, refer to an operation ③ of sliding leftward and an operation ④ of sliding rightward shown in FIG. 10B, or refer to an operation ⑤ of sliding downward and an operation ⑥ of sliding upward shown in FIG. 10C. For a specific execution process correspondingly triggered by a specific user operation, refer to related descriptions of the following corresponding steps. Details are not described herein.

903: In response to the tap operation for the banner notification, open an interface of a related application.

For example, as shown in FIG. 10A, the user may perform a tap operation on displayed content of a banner notification 011 displayed on the mobile phone 100. Correspondingly, the mobile phone 100 may open a related interface of a calendar application to which a notification message displayed on the banner notification 011 belongs.

In some other embodiments, as shown in FIG. 10A, the user performs a tap operation on displayed content of a banner notification 012 displayed on the mobile phone 100, or may perform an operation of answering a call, rejecting a call, or the like. This is not limited herein.

904: Determine whether a direction of the slide operation is an x direction or a y direction.

If a result of the determining is the x direction, that is, the user operation is a leftward or rightward slide operation, step 905 below may be further performed to execute a corresponding trigger process.

If a result of the determining is the y direction, that is, the user operation is an upward or a downward slide operation, a determining process of step 906 below may be further performed.

905: Execute a notification deletion process correspondingly triggered by the leftward or rightward slide operation.

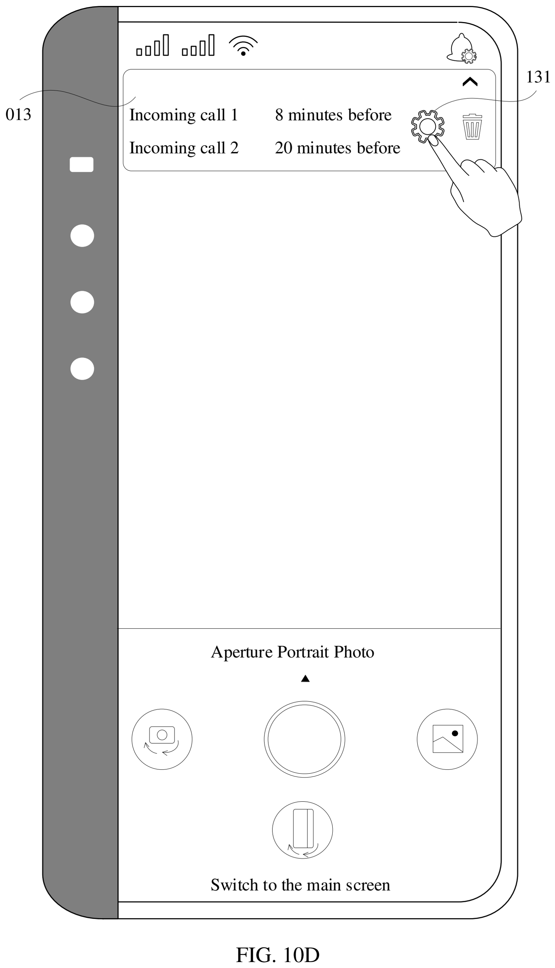

For example, with reference to the operation ③ shown in FIG. 10B, the user slides leftward on the banner notification 011 displayed on the mobile phone 100, so that the mobile phone 100 displays a banner notification setting interface 013 shown in FIG. 10D. With reference to the operation ④ shown in FIG. 10B, the user can delete the notification message by sliding rightward on the banner notification 012 displayed on the mobile phone 100.

In some embodiments, a setting control may also be invoked through the leftward slide operation performed by the user. With reference to a setting control 131 shown in FIG. 10D, the user can tap the setting control 131 to set whether to display the notification message silently or whether to display the notification message on the top. This is not limited herein.

906: Determine whether the direction of the slide operation is upward or downward.

If a result of the determining is upward, that is, the user operation is an upward slide operation, steps 907 and 908 below may be further performed, to execute a correspondingly triggered setting process.

If a result of the determining is downward, that is, the user operation is a pull-down slide operation, step 909 below may be further performed.

907: Set the notification message displayed on the banner notification to a silent notification.

908: Retract the notification message upward.

For example, with reference to the operation ⑥ shown in FIG. 10C, the user slides upward on the banner notification 012 displayed on the mobile phone 100. This may trigger setting the notification message displayed on the banner notification to the silent notification and trigger retracting the notification message displayed on the banner notification upward. It may be understood that, after the banner notification 012 is retracted upward, the shooting interface displayed on the mobile phone 100 is not shielded, and the user may continue to perform some shooting operations and the like on the shooting interface to satisfy requirements of the user.

909: Skip responding to a downward pull-down slide operation.

For example, with reference to the operation ⑤ shown in FIG. 10C, the user slides downward on the banner notification 011 displayed on the mobile phone 100, so that the mobile phone 100 can display more content of the notification message displayed on the banner notification. However, in a setting in which pull-down of the status bar is disabled but display of the banner notification is allowed, the mobile phone 100 cannot respond to the pull-down slide operation of sliding the banner notification downward by the user, that is, does not respond to the downward pull-down slide operation. In this way, the following case can be avoided: Due to a misoperation of the user, the mobile phone 100 exits the shooting interface, or the shooting interface displayed on the mobile phone 100 is shielded by a larger banner notification window.

It may be understood that, if the user wishes to display more content of the notification message on the shooting interface shown in FIG. 10C, the SystemUI 512 may be set, by using the setting application, the camera application 511, or the like, to allow pull-down of the status bar and allow display of the banner notification and the like in a state of displaying the shooting interface on the subordinate screen. For a setting process, refer to the related descriptions of step 606 or step 612 in the interaction procedure shown in FIG. 6A, FIG. 6B, FIG. 6C, and FIG. 6D. Details are not described herein again.

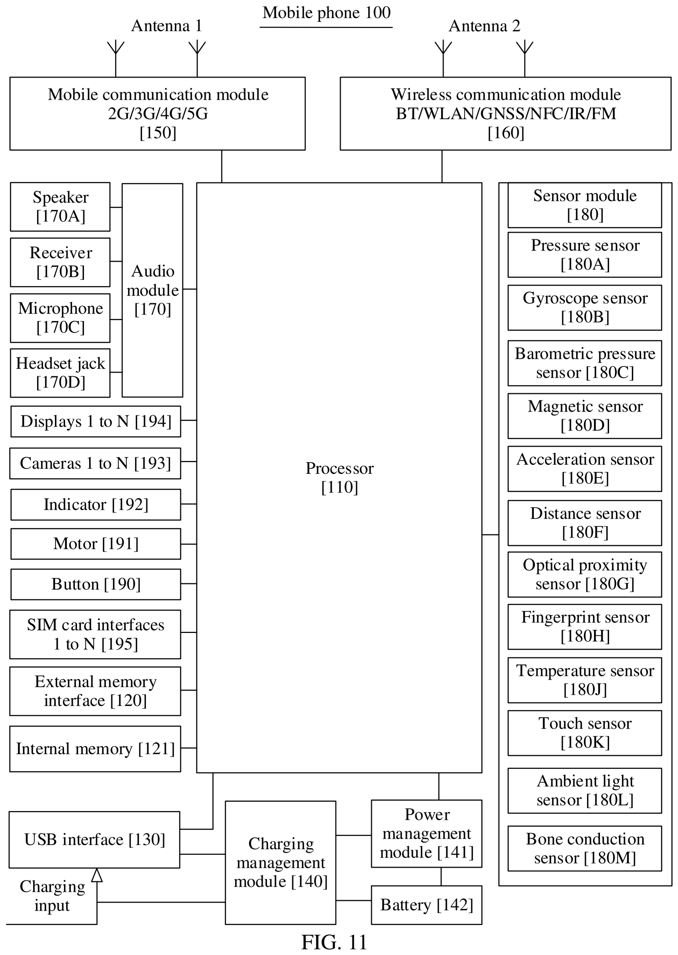

FIG. 11 is a diagram of a hardware structure of a terminal device according to an embodiment of this application. The terminal device may be, for example, the foldable-screen device: the mobile phone 100, and is used as a terminal electronic device for implementing the display method provided in this application. This is not limited herein. Description is provided below by using the mobile phone 100 as an example.

As shown in FIG. 11, the mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, an air pressure sensor 180C, a magnetic sensor 180D, an acceleration sensor 180E, a distance sensor 180F, a proximity light sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the mobile phone 100. In some other embodiments of this application, the mobile phone 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate components, or may be integrated into one or more processors.

The controller may generate an operation control signal based on instruction operation code and a timing signal, to complete control of fetching an instruction and executing the instruction. In this embodiment of this application, the mobile phone 100 may run, by using the processor 110, a camera application to set related code or instructions such as whether to disable an operation of pulling down a status bar and whether to allow display of a banner notification on a shooting interface in a selfie mode, and complete instruction fetching by using an operation control signal generated by the controller, to perform related steps in the implementation procedure of the display method provided in embodiments of this application. For a specific execution process, refer to related descriptions of FIG. 1A(1) to FIG. 10D. Details are not described herein again.

A memory may be further disposed in the processor 110, and is configured to store instructions and data. In some embodiments, the memory in the processor 110 is a cache. The memory may store instructions or data that has been used or is cyclically used by the processor 110. If the processor 110 needs to use the instructions or the data again, the processor 110 may directly call the instructions or the data from the memory. This avoids repeated access, and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that complies with the USB standard specification, and may be specifically a Mini USB interface, a Micro USB interface, a USB Type-C interface, or the like. The USB interface 130 may be configured to connect to a charger to charge the mobile phone 100, or may be configured to transmit data between the mobile phone 100 and a peripheral device, or may be configured to connect to a headset, to play audio by using the headset. The interface may alternatively be configured to connect to another terminal, for example, an AR device.

It can be understood that an interface connection relationship between the modules illustrated in this embodiment of the present invention is merely an example for description, and does not constitute a limitation on the structure of the mobile phone 100. In some other embodiments of this application, the mobile phone 100 may alternatively use an interface connection manner different from that in the foregoing embodiment or use a combination of a plurality of interface connection manners.

The charging management module 140 is configured to receive charging input from the charger. The power management module 141 is configured to connect to the battery 142, the charging management module 140, and the processor 110. The power management module 141 receives input from the battery 142 and/or the charging management module 140, and supplies power to the processor 110, the internal memory 121, the display 194, the camera 193, the wireless communication module 160, and the like.

A wireless communication function of the mobile phone 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the mobile phone 100 may be configured to cover one or more communication frequency bands. Different antennas may also be multiplexed to improve utilization of the antennas. For example, the antenna 1 may be multiplexed as a diversity antenna in a wireless local area network. In some other embodiments, the antenna may be used in combination with a tuning switch.

The mobile communication module 150 may provide a wireless communication solution that is applied to the mobile phone 100 and that includes 2G/3G/4G/5G, or the like.

The wireless communication module 160 may provide wireless communication solutions applied to the mobile phone 100, including a wireless local area network (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technology.

In some embodiments, the antenna 1 and the mobile communication module 150 of the mobile phone 100 are coupled, and the antenna 2 and the wireless communication module 160 of the mobile phone are coupled, so that the mobile phone 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR technologies, and the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The mobile phone 100 implements a display function by using the GPU, the display 194, the application processor, and the like. The GPU is a microprocessor for image processing and connects the display 194 to the application processor. The GPU is configured to perform mathematical and geometric computation for graphics rendering. The processor 110 may include one or more GPUs that execute program instructions to generate or change display information.

The display 194 is configured to display an image, a video, an application interface, and the like. The display 194 may include a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Mini-LED, a Micro-LED, a Micro-OLED, a quantum dot light emitting diode (quantum dot light emitting diodes, QLED), and the like. In some embodiments, the mobile phone 100 may include one or N displays 194, where N is a positive integer greater than 1.

The mobile phone 100 may implement a shooting function by using the ISP, the camera 193, the video codec, the GPU, the display 194, the application processor, and the like. The ISP is configured to process data fed back by the camera 193. The camera 193 is configured to capture a still image or a video. The digital signal processor is configured to process a digital signal, and may process another digital signal in addition to a digital image signal. The video codec is configured to compress or decompress a digital video. The mobile phone 100 can support one or more types of video codecs. In this way, the mobile phone 100 may play or record videos in a plurality of coding formats, for example, moving picture experts group (moving picture experts group, MPEG) 1, MPEG 2, MPEG 3, and MPEG 4.

The external memory interface 120 may be configured to connect to an external storage card, for example, a Micro SD card, to extend a storage capability of the mobile phone 100. The external memory card communicates with the processor 110 through the external memory interface 120, to implement a data storage function. For example, files such as music and a video are stored in the external storage card.

The internal memory 121 may be configured to store computer executable program code, and the executable program code includes instructions. The internal memory 121 may include a program storage area and a data storage area. The program storage area may store an operating system, an application required by at least one function (for example, a voice playing function and an image playing function), and the like. The data storage area may store data (for example, audio data and a phone book) and the like created in a process of using the mobile phone 100. In addition, the internal memory 121 may include a high-speed random access memory, and may further include a non-volatile memory, for example, at least one magnetic disk storage device, a flash storage device, or a universal flash storage (universal flash storage, UFS). The processor 110 performs various function applications and data processing of the mobile phone 100 by running the instructions stored in the internal memory 121 and/or the instructions stored in the memory disposed in the processor, for example, running an application installed on the terminal and a synchronization service preset on the terminal and implementing notification management by interacting with a cloud.

The mobile phone 100 may implement an audio function through the audio module 170, the speaker 170A, the receiver 170B, the microphone 170C, the headset jack 170D, the application processor, and the like, for example, music playing and sound recording.

The audio module 170 is configured to convert digital audio information into analog audio signal output, and is also configured to convert analog audio input into a digital audio signal. The audio module 170 may be further configured to encode and decode the audio signal. In some embodiments, the audio module 170 may be disposed in the processor 110, or some functional modules in the audio module 170 are disposed in the processor 110. The speaker 170A, also referred to as "horn", is configured to convert an electrical audio signal into a sound signal. The receiver 170B, also referred to as "earpiece", is configured to convert an electrical audio signal into a sound signal. The microphone 170C, also referred to as a "mic" and a "mike", is configured to convert a sound signal into an electrical signal. The headset jack 170D is configured to connect to a wired headset.

The pressure sensor 180A is configured to sense a pressure signal, and may convert the pressure signal to an electrical signal. In some embodiments, the pressure sensor 180A may be disposed on the display 194. The pressure sensor 180A may be of any type, for example, a resistive pressure sensor, an inductive pressure sensor, or a capacitive pressure sensor. The capacitive pressure sensor may include at least two parallel plates made of conductive materials. When force is applied to the pressure sensor 180A, a capacitance between electrodes changes. The mobile phone 100 determines strength of pressure based on a change of the capacitance. When a touch operation is performed on the display 194, the mobile phone 100 detects strength of the touch operation by using the pressure sensor 180A. The mobile phone 100 may also calculate a touch position based on a signal detected by the pressure sensor 180A. In some embodiments, touch operations performed at a same touch position but having different touch operation intensity may correspond to different operation instructions.

The acceleration sensor 180E may detect acceleration values of the mobile phone 100 in all directions (generally in three axes), and may detect a magnitude and a direction of gravity when the mobile phone 100 is static. The acceleration sensor may be further configured to identify a posture of the terminal, and is applied to switching between a landscape and a portrait and applications such as a pedometer.

The ambient light sensor 180L is configured to sense ambient light brightness.

The fingerprint sensor 180H is configured to collect a fingerprint.

The temperature sensor 180J is configured to detect temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation on or near the touch sensor. The touch sensor may transmit the detected touch operation to the application processor to determine a type of a touch event. Visual output related to the touch operation may be provided through the display 194. In some other embodiments, the touch sensor 180K may alternatively be disposed on a surface of the mobile phone 100, and is located on a position different from that of the display 194.

The button 190 includes a power-on/off button, a volume button, and the like. The button 190 may be a mechanical button, or may be a touch key. The mobile phone 100 may receive button input, and generate button signal input related to a user setting and function control of the mobile phone 100.

The motor 191 may generate a vibration alert. The motor 191 may be configured to provide a vibration prompt for an incoming call, and may be further configured to provide vibration feedback for a touch. For example, touch operations performed on different applications (for example, shooting and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may further correspond to different vibration feedback effects. Customization of a touch vibration feedback effect may further be supported.

The indicator 192 may be an indicator light, and may be configured to indicate a charging status and a power change, or may be configured to indicate a message, a missed call, a notification, and the like.

The SIM card interface 195 is configured to connect to an SIM card. The SIM card may be inserted into the SIM card interface 195 or plugged from the SIM card interface 195, to come into contact with or be separated from the mobile phone 100.

A reference to "an embodiment" or "embodiments" in this specification means that specific features, structures, or characteristics described with reference to the embodiment are included in at least one example implementation solution or technology disclosed according to embodiments of this application. The phrase "in one embodiment" appearing in various places in this specification does not necessarily all mean a same embodiment.

Disclosure in embodiments of this application further relates to an apparatus configured to perform operations in the text. The apparatus may be specially constructed for a required purpose, or may include a general-purpose computer that is selectively activated or reconfigured by a computer program stored in the computer. Such a computer program may be stored in a computer-readable medium, for example, but is not limited to any type of disk, including a floppy disk, an optical disc, a CD-ROM, a magneto-optical disk, a read-only memory (ROM), a random access memory (RAM), an EPROM, an EEPROM, a magnetic or optical card, an application-specific integrated circuit (ASIC), or any type of medium suitable for storing electronic instructions, and each of the disks may be coupled to a computer system bus. In addition, the computer mentioned in this specification may include a single processor or may be an architecture using a plurality of processors for increased computing capabilities.

In addition, the language used in the specification has been primarily selected for readability and guidance purposes and may not be selected to describe or limit the disclosed subject matter. Therefore, disclosure in embodiments of this application is intended to describe rather than limit the scope of the concept discussed in this specification.

## Claims

1. A display method, applied to a terminal device, wherein the terminal device comprises a display, the display comprises at least a first screen, a second screen, and a first camera, and the first screen and the first camera of the terminal device are respectively located on two sides of the terminal device;
when the terminal device is in an unfolded state, the first screen and the second screen are on a same side of the terminal device; and
when the terminal device is in a folded state, the first camera and the second screen are located on a same side of the terminal device; and the method comprises:
displaying a first interface of a first application on the first screen based on the terminal device being in the folded state;
receiving, at a first time point, a first notification of a second application, and displaying a banner notification of the first notification on the first screen;
receiving, at a second time point, a first operation of pulling down a status bar, and displaying a notification list, wherein the notification list comprises an option of at least one notification;
displaying a second interface of the second application in response to a user tapping an option of the first notification;
after the user flips a mobile phone, displaying a third interface of the first application on the second screen;
receiving, at a third time point, a second notification of the second application, and displaying a banner notification of the second notification on the second screen; and
receiving, at a fourth time point, a second operation of pulling down the status bar, and skipping displaying the notification list.

2. The method according to claim 1, wherein the first screen and the second screen are two parts of display areas of the display; and
the third interface is an interface obtained after the first interface is adapted to a size of the second screen through adjustment.

3. The method according to claim 1, wherein the method comprises:
after the fourth time point, based on the terminal device being in the folded state, displaying the first interface of the first application on the second screen, and skipping responding to the second operation of pulling down the status bar.

4. The method according to any one of claims 1 to 3, wherein an attribute parameter of the status bar comprises a first attribute parameter and a second attribute parameter, wherein
the first attribute parameter indicates whether an interface displayed on the first screen or the second screen responds to the operation of pulling down the status bar, and indicates whether a banner notification is displayed on the interface displayed on the first screen or the second screen; and
the second attribute parameter indicates whether the interface displayed on the first screen or the second screen responds to the operation of pulling down the status bar, and indicates whether the banner notification is displayed on the interface displayed on the first screen or the second screen.

5. The method according to claim 4, wherein types of the first attribute parameter and the second attribute parameter each comprise a flag attribute; and
the first attribute parameter comprises an attribute parameter "DISABLE_EXPAND_EXCEPT_HEADSUP", and the second attribute parameter comprises an attribute parameter "DISABLE_EXPAND".

6. The method according to claim 5, wherein the method comprises:
based on a value of the second attribute parameter being set to 0 and a value of the first attribute parameter being set to 0, receiving, at the first time point, the first notification of the second application, and displaying the banner notification of the first notification on the first screen; and
based on the value of the second attribute parameter being set to 0 and the value of the first attribute parameter being set to 0, receiving, at the second time point, the first operation of pulling down the status bar, and displaying the notification list.

7. The method according to claim 5, wherein the method comprises:
based on a value of the second attribute parameter being set to 0 and a value of the first attribute parameter being set to 1, receiving, at the third time point, the second notification of the second application, and displaying the banner notification of the second notification on the second screen; and
based on the value of the second attribute parameter being set to 0 and the value of the first attribute parameter being set to 1, receiving, at the fourth time point, the second operation of pulling down the status bar, and skipping displaying the notification list.

8. The method according to claim 5, wherein the method further comprises:
based on a value of the second attribute parameter being set to 1, receiving, at a fifth time point, a third notification of the second application, and skipping displaying a banner notification of the third notification on the first screen or the second screen; and
based on the value of the second attribute parameter being set to 1, receiving, at a sixth time point, a third operation of pulling down the status bar, and skipping displaying the notification list.

9. The method according to claim 8, wherein setting the value of the second attribute parameter to 1 comprises:
receiving a value set by the first application for the second attribute parameter, and setting the value of the second attribute parameter to 1; or
receiving an operation of setting the second attribute parameter in a setting interface by the user, and setting the value of the second attribute parameter to 1.

10. The method according to any one of claims 1 to 9, wherein the operation of pulling down the status bar comprises:
a fourth operation of sliding downward by the user in a touch area that is displayed on a screen top of the first screen or the second screen and that is close to a first side edge, wherein the fourth operation enables the terminal device to display the notification list; or
a fifth operation of sliding downward by the user in a touch area that is displayed on a screen top of the first screen or the second screen and that is close to a second side edge, wherein the fifth operation enables the terminal device to display a control center; wherein the first side edge and the second side edge are different side edges of the screen top of the first screen or the second screen.

11. A terminal device, comprising one or more processors and one or more memories, wherein the one or more memories store one or more programs, and when the one or more programs are executed by the one or more processors, the terminal device is enabled to execute the display method according to any one of claims 1 to 10.

12. A computer-readable medium, wherein the readable medium stores instructions, and when the instructions are executed on a computer, the computer is enabled to execute the display method according to any one of claims 1 to 10.
